Europäisches Patentamt

European Patent Office

Office européen des brevets

(19)

(11) Veröffentlichungsnummer: **0 374 583**
**A2**

(12) **EUROPÄISCHE PATENTANMELDUNG**

(21) Anmeldenummer: **89122456.0**

(22) Anmeldetag: **06.12.89**

(51) Int. Cl.⁵: **B29C 53/60, B29C 67/14, B29C 63/10, //B29L23:22**

(30) Priorität: **09.12.88 DE 3841597**
**28.11.89 DE 8913985 U**

(43) Veröffentlichungstag der Anmeldung:
**27.06.90 Patentblatt 90/26**

(84) Benannte Vertragsstaaten:
**ES GR**

(71) Anmelder: **Elsner, Lothar**
**Bahnhofstrasse 45**
**D-7157 Winnenden(DE)**

(72) Erfinder: **Elsner, Lothar**
**Bahnhofstrasse 45**
**D-7157 Winnenden(DE)**

(74) Vertreter: **Kastner, Hermann, Dipl.-Ing.**
**Osterholzallee 89**
**D-7140 Ludwigsburg(DE)**

(54) Verfahren zum kontinuierlichen Herstellen von faserverstärkten Kunststoffrohren und Einrichtung zum Durchführen des Verfahrens.

(57) Durch das Verfahren wird schrittweise ein Kunststoffrohr aufgebaut, das schichtenweise von innen nach außen eine innere Trennfolie, eine Innenhaut, eine harzreiche Zwischenschicht mit Faservlieseinlage, mehrere einander abwechselnde axiale und tangentiale Verstärkungsschichten aus in Kunstharz eingebetteten Fasersträngen, eine Außenhaut und eine äußere Trennfolie aufweist. Die Einrichtung (10) zum Durchführen des Verfahrens weist die dazu erforderlichen Arbeitsstationen auf, die an einem gemeinsamen Grundgestell (16) angeordnet sind. Daran ist mittels einer Haltevorrichtung (21) ein langgestreckter Dorn (22) ortsfest gehalten. Entlang dem Dorn sind angeordnet, eine Zuführ- und Formvorrichtung (23, 26, 27) für die schlauchförmige Trennfolie (25), eine Zuführvorrichtung (33) für das Kunstharz der Innenhaut, eine Erwärmungsvorrichtung (43) für das Anhärten der Innenhaut, eine Zuführvorrichtung (48) für ein Faservlies (51) für die Zwischenschicht, mehrere Zuführvorrichtungen (55) für je eine Kunstharzschicht sowie dazwischen abwechselnd Zuführvorrichtungen (15, 63) für axial und tangential verlaufende Faserstränge zur Bildung der entsprechenden Verstärkungsschichten, dazwischen außerdem Ringrakel (41, 61) zum Abstreifen von Kunstharzüberschüssen und zum Verfestigen insbesondere der Schichten mit Fasereinlagen, eine Zuführvorrichtung für das Kunstharz der Außenhaut, eine Zuführvorrichtung und Formvorrichtung für das Zuführen der äußeren Trennfolie, eine Erwärmungsstation für das Einleiten des Härtevorganges der verschiedenen Kunstharzschichten mit anschließender Aushärtestrecke, eine Zugvorrichtung mit Kettenförderer für das Weiterziehen des Kunststoffrohres, eine fliegende Trenneinrichtung für das Zerteilen des endlosen Kunststoffrohres in handelsübliche Verkaufslängen und schließlich ein Rohrlager.

Fig.1

EP 0 374 583 A2

# Verfahren zum kontinuierlichen Herstellen von faserverstärkten Kunststoffrohren und Einrichtung zum Durchführen des Verfahrens

Für das Herstellen von faserverstärkten Kunststoffrohren gibt es in der Praxis verschiedene Verfahren. Bei einem dieser Verfahren wird auf einen rotierenden Dorn ein Trennmittel aufgetragen. Darauf wird eine Stützschicht aufgebracht, die häufig als harzreiche Schicht bezeichnet wird. Dazu wird manchmal ein bindemittelfreies, d.h. nicht harzgetränktes Gelege aus einem Wirrfaservlies aufgewickelt und anschließend mit einem Kunstharz getränkt. Häufiger wird ein mit Bindemitteln gebundenes Gelege aufgebracht, nämlich entweder ein harzgebundenes Vlies oder ein Mattenband aus Glasseiden-Kurzfasern, die mittels eines Bindemittels untereinander gebunden sind, oder eine aufgespritzte Schicht aus einem Gemenge aus Glasseiden-Kurzfasern und einem Bindeharz. Die aufgespritzte Stützschicht wird in der Regel mechanisch verdichtet und dabei entlüftet.

Das Trockenvlies wie auch das gebundene Vlies sowie das Mattenband können auch zuvor durch ein Tränkbad hindurchgeführt werden und dabei mit einem Tränkharz getränkt werden und dann erst auf das Trennmittel auf dem sich drehenden Wickeldorn aufgewickelt werden. Manchmal wird das Tränkharz auch unmittelbar auf die Trennschicht aufgebracht und danach erst das Vlies oder das Mattenband aufgewickelt und dabei zugleich in das Tränkharz eingebettet.

Auf eine darauf hergestellte Stützschicht werden noch eine oder mehrere Verstärkungsschichten aufgebracht. Eine solche Verstärkungsschicht besteht wiederum aus einem bandförmigen oder strangförmigen Gelege und einem Tränkharz. Beim Gelege kommen wieder unterschiedliche Ausführungsformen in Betracht; nämlich ein Glasseiden-Gewebeband oder ein sogenanntes Unidirektional-Gewebeband, bei dem eine Anzahl parallel nebeneinander liegender Fäden oder Fasern mittels Querfäden oder Haltefäden in gewissen größeren Abständen mechanisch in Bandform gehalten werden, oder ein Faserstrang, ein sogenannter Roving, bei dem die Fasern bandförmig nebeneinander liegen. Das Aufbringen des Tränkharzes für die Verstärkungsschicht geschieht entweder dadurch, daß das Gewebeband oder der Faserstrang durch das Tränkharz hindurchgeführt werden und dabei getränkt werden, oder dadurch, daß das Tränkharz wenigstens zum Teil vorher auf die Stützschicht aufgebracht wird und darin das Gewebeband oder der Faserstrang anschließend eingebettet wird. Bei der Bildung der Verstärkungsschicht kann das Gewebeband oder der Faserstrang einlagig oder mehrlagig aufgebracht werden. Bei mehrlagigem Aufbringen werden das Gewebeband oder der Faserstrang am Rohrstück durch ein- oder mehrmals wiederkehrende Längsbewegungen eines Supports aufgebracht, wobei manchmal an den Enden des Rohres je ein Stiftenkranz angeordnet ist, um dessen Stifte das Band oder der Faserstrang herumgeschlungen wird. Dadurch entsteht eine Art Diagonalgelege.

Manchmal wird auf diese Verstärkungsschicht noch eine Deckschicht aufgebracht, die ein Vlies enthalten kann und die in jedem Falle aus einer Harzschicht besteht, die der Bildung einer glatteren Außenseite des faserverstärkten Kunststoffrohres dient.

Die Tränkharze werden durch chemische Reaktionen gehärtet, die meist durch Wärmeeinwirkung ausgelöst werden und dadurch der rohrförmige Schichtaufbau zum Rohr verfestigt. Erst nach dieser Verfestigung kann das Rohr vom Dorn abgezogen werden. Danach werden meist an beiden Enden die Endabschnitte abgetrennt, in denen das Gewebe oder der Faserstrang entweder ungleichmäßig endet oder, bei mehrlagiger Verstärkungsschicht, das Gewebeband oder der Faserstrang Umkehrstellen aufweist. Diese abgetrennten Endabschnitte stellen einen unverwertbaren Abfall dar.

Eine der Nachteile dieses Verfahrens ist der, daß es diskontinuierlich arbeitet. Wegen der diskontinuierlichen Arbeitsweise ist die Fertigung sehr zeitaufwendig. Bei mehrlagiger Verstärkungsschicht kommt hinzu, daß der Support an den Umkehrstellen angehalten und in der umgekehrten Bewegungsrichtung wieder beschleunigt werden muß. Das bedeutet einen zusätzlichen Zeitaufwand. Von noch größerem Nachteil ist dabei, daß die Aufwickelgeschwindigkeit und damit auch die Zuführgeschwindigkeit für das Fasergewebe oder den Faserstrang Schwankungen unterliegt, die sich nachteilig auf das Gelege selbst und vor allem auf die Harztränkung auswirken.

Das auf dem Wickeldorn entstandene Rohrstück sitzt sehr fest auf dem Wickeldorn. Davon muß es unter Aufwendung sehr hoher Kräfte mühsam abgezogen werden.

Wenn bei einem solchen Rohr insbesondere die Stützschicht nicht ausreichend gut entlüftet wird und dadurch Poren in der Stütztschicht zurückbleiben, neigt ein solches Rohr zum "Schwitzen". Ein im Inneren des Rohres unter Druck stehendes Medium tritt in mehr oder minder großer Menge durch die Rohrwand hindurch nach außen aus, wo es wie Schweißtropfen in Erscheinung tritt.

Derartig gewickelte Rohre haben vor allem in Umfangsrichtung eine mehr oder minder wellige, d.h. ungleichmäßige Außenseite. Ein solches Rohr ist außen nicht kalibriert. Es weist mehr oder minder große Toleranzen in der Wanddicke auf und dementsprechend auch größere Toleranzen im Außendurchmesser.

Bei einem solchen Rohr ist das Gelege oder die Einlage aus dem Gewebeband oder dem Faserstrang unter einem größeren Steigungswinkel gegenüber einer Normalebene zur Längsachse des Rohres ausgerichtet. Dadurch geht die Festigkeit der Einlage als solcher nicht in vollem Ausmaße in die Festigkeit der Rohrwand ein. Daher müssen solche Rohre verhältnismäßig dickwandig ausgeführt werden, um überhaupt eine gewisse Druckfestigkeit zu erreichen. Die verhältnismäßig große Wanddicke hat ein entsprechend großes Metergewicht des Rohres zur Folge.

Die "Überkreuzlage" der Einlage hat außerdem zur Folge, daß bei Temperaturänderungen die dem Harz innewohnende verhältnismäßig große Wärmedehnung von der Einlage nur unzureichend aufgefangen werden kann. Solche Rohre haben demnach selbst eine verhältnismäßig große Wärmedehnung, die vor allem in Längsrichtung sehr störend ist. Daher eignen sich solche Rohre in der Regel nicht für Leitungen, in denen im Medium häufig Temperaturschwankungen oder gar sprunghafte Temperaturwechsel auftreten.

Bei dem zuvor beschriebenen Verfahren werden die Gewebebänder oder Faserstränge beim mehrlagigen Aufbringen im allgemeinen mit jeweils gleichen Steigungswinkeln in beiden Wickelrichtungen aufgebracht. Daneben gibt es auch noch ein Wickelverfahren, bei dem unterschiedliche Wickelwinkel angewendet werden (Dual angle winding). Auf einen stehenden Dorn wird eine Trennfolie aufgebracht, und zwar in Wendelform mit sehr großem Steigungswinkel. Die Ränder der Folienwendel überlappen einander. Auf die Trennfolie wird ein harzgetränktes Vlies in Bandform wendelartig mit großem Steigungswinkel aufgewickelt. Dieses Vlies wird mit einer gewissen Spannung auf die Trennfolie aufgebracht. Dieses harzgetränkte Vlies bildet die Stützschicht für das Kunststoffrohr. Auf die Stützschicht wird ein harzgetränktes Gewebeband von einer bestimmten Breite aufgewickelt, die kleiner ist als der Außenumfang der Stützschicht. Das Gewebeband wird dabei auf die Stützschicht mit einem sehr großen Steigungswinkel aufgewickelt, so daß aufgrund der in grober Näherung axialen Ausrichtung der Kettfäden des Gewebes eine 'quasi axiale' Verstärkungsschicht entsteht. Diese erste Verstärkungsschicht wird durch Rollen verdichtet.

Auf die erste Verstärkungsschicht wird ein harzgetränktes Gewebeband von einer Breite aufgewickelt, die erheblich geringer als die Breite des ersten Gewebebandes ist. Sie wird mit einer deutlich geringeren Steigung als bei der ersten Verstärkungsschicht aufgewickelt, wobei die Bandwendel an ihren Rändern stumpf einander anstoßen. Die Steigung der Kettfäden des Gewebebandes der zweiten Verstärkungsschicht liegt im allgemeinen zwischen 45° und 30°, so daß man diese Verstärkungsschicht als 'quasi tangential' bezeichnen kann. Die Steigung der Kettfäden des Gewebebandes der zweiten Verstärkungsschicht ist gegensinnig zur Steigung der Kettfäden der ersten Verstärkungsschicht ausgerichtet. Die zweite Verstärkungsschicht wird ebenfalls durch Rollen verdichtet. Darauf wird ein drittes harzgetränktes Gewebeband aufgewickelt, und zwar ebenfalls wieder mit einer geringeren Steigung mit einem Steigungswinkel zwischen 45° und 30°, so daß eine zweite 'quasi tangentiale' Verstärkungsschicht entsteht. Deren Steigung ist gegensinnig zu derjenigen der zweiten Verstärkungsschicht. Auch diese dritte Verstärkungsschicht wird mittels Rollen verdichtet.

Die Trennfolie, das Vlies für die Stützschicht und die harzgetränkten Gewebebänder für alle drei Verstärkungsschichten werden von Rotoren aufgebracht, die um die Rohrachse umlaufen. Auf den Rotoren sind die betreffenden Bänder auf Vorratsrollen aufgewickelt. Dadurch arbeitet dieses Wickelverfahren kontinuierlich.

Den nach diesem Verfahren hergestellten faserverstärkten Kunststoffrohren haften eine Reihe von Nachteilen an.

Die Bandwendel der drei Verstärkungsschichten liegen lose nebeneinander und stoßen lediglich mit den Rändern aneinander an. Sie überlappen einander nicht, weil sie dafür eine zu große Dicke haben. Bei einer Überlappung würden wendelartig verlaufende Wülste entstehen. Weil die Bandwendel nur nebeneinander liegen, ist die Festigkeit einer jeden Verstärkungsschicht quer zu ihrer Steigung sehr gering, weil sie allenfalls über ihr Tränkharz miteinander verbunden sind.

Die bei diesem Wickelverfahren verwendeten Gewebebänder haben aufgrund der Gewebebildung eine Gesamtdicke, die näherungsweise gleich der Summe der Dicke ihrer Kettfäden und ihrer Schußfäden ist. Dieser Umstand hat zur Folge, daß die Gewebebänder innerhalb der sie einhüllenden fiktiven Ebenen verhältnismäßig große Hohlräume aufweisen, die von dem Tränkharz ausgefüllt werden. Die so hergestellten Rohre haben deshalb einen verhältnismäßig großen Harzanteil. Sie sind deshalb auch verhältnismäßig dickwandig und schwer.

Die bei diesem Verfahren verwendeten Gewebebänder sind verhältnismäßig teuer in der Herstellung. Sie haben auch nur eine begrenzte Länge. Die Gewebebänder müssen daher bei der kontinuierlichen Rohrherstellung des öfteren gewechselt werden, indem der Anfang des neuen Gewebebandes am Ende des vorhergehenden Gewebebandes so eng wie möglich angesetzt wird. Das ist stets mit Schwierigkeiten verbunden.

Auch bei diesem Verfahren kann die den harzgetränkten Gewebebändern an sich innewohnende Festigkeit bei dem Rohr nur zum Teil ausgenutzt werden, weil die Kettfäden der ersten Verstärkungsschicht nur quasi axial ausgerichtet sind und in Wirklichkeit noch einen merklichen Steigungswinkel aufweisen, und weil die Kettfäden der zweiten und der dritten Verstärkungsschicht ihrerseits nur quasi tangential ausgerichtet sind und ihre Steigung von der Nullsteigung der rein tagentialen Ausrichtung noch verhältnismäßig weit entfernt ist.

Aufgrund der lediglich quasi axialen Ausrichtung der Kettfäden der ersten Verstärkungsschicht und der lediglich quasi tangentialen Ausrichtung der Kettfäden der zweiten und dritten Verstärkungsschicht mit jeweils größeren Abweichungen ihrem Verlaufs gegenüber der Idealrichtung haben diese Rohre einen verhältnismäßig großen Wärmedehnungskoeffizienten, auch wenn dieser geringer als beim reinen Harz ist.

Die Außenseite dieser Rohre ist nicht glatt. Ihre Wanddicke und auch ihr Außendurchmesser haben verhältnismäßig große Toleranzen. Aus beiden Gründen können diese Rohre nicht mittels rein metallischer Fitting-Systeme untereinander verbunden werden oder an Armaturen angeschlossen werden. Fitting-Systeme mit Rundschnurringen als elastischem Dichtungselement können wegen der Unebenheiten der Außenseite dieser Rohre ebenfalls nicht verwendet werden. Sie ergeben keine ausreichende Dichtigkeit. Diese Rohre können daher nur mittels Klebemuffen miteinander verbunden werden, wobei wiederum wegen der unebenen Außenseite und wegen der großen Durchmessertoleranzen das Einsteckende zu einem sogenannten Spitzende kegelig angeschärft und dabei zugleich geglättet werden muß. Dieses Erfordernis ist insbesondere auf Baustellen von großem Nachteil.

Der Erfindung liegt die Aufgabe zugrunde, ein Verfahren anzugeben, mit dem faserverstärkte Kunststoffrohre kontinuierlich hergestellt werden können, die bessere Festigkeitseigenschaften haben, als die nach den herkömmlichen Verfahren gefertigten Rohre, die bei gleicher Druckfestigkeit eine geringere Wanddicke und dementsprechend ein geringeres Metergewicht haben und die eine glattere und gleichmäßigere Außenseite haben. Der Erfindung liegt außerdem die Aufgabe zugrunde, eine Einrichtung anzugeben, mittels der dieses Verfahren durchgeführt werden kann.

Damit, daß gemäß dem Verfahren nach Anspruch 1 auf dem Trennschlauch zuerst eine Innenhaut aufgebaut wird und diese zum Gelieren gebracht wird, so daß sie eine gewisse Druckfestigkeit hat, und daß darauf erst die Stützschicht mit der Vlieseinlage aufgebracht wird, erhält das spätere Kunststoffrohr eine innerste Schicht, die frei von Gewebe- oder Fasereinlagen ist, bei der also keine Poren zu befürchten sind. Die Durchlässigkeit des Rohres für ein später durch es hindurchzuleitendes Medium wird damit in denkbar größtem Maße verringert, wenn nicht gar beseitigt. Dadurch, daß die Kunstharzschicht für die Innenhaut vor dem Aufbringen der Stützschicht zum Gelieren gebracht wurde, wird verhindert, daß bei den folgenden Verfahrensschritten durch das Aufbringen der Verstärkungsschichten die Stützschicht, insbesondere ihre Vlieseinlage, in die Innenhaut hineingedrückt wird und deren Undurchlässigkeit vermindert. Das wird durch die Verwendung eines Wirrfaservlieses für die Stützschicht noch unterstützt. Damit, daß die Fasern für die erste Verstärkungsschicht zunächst in Form mehrerer Faserstränge der Leitvorrichtung zugeleitet werden und von dieser aus in Form eines geschlossenen kegelstumpfförmigen Fasermantels der den Dorn umgebenden Ringrakel zugeleitet werden und von dieser in die zuvor aufgegossene Kunstharzschicht eingebettet werden, erhält man einen genau axial ausgerichteten Faserverlauf in der ersten Verstärkungsschicht. Dadurch, daß diese Fasern von außen her in die zuvor aufgebracht Kunstharzschicht eingebettet werden und nicht etwa ein kunstharzgetränktes Gewebeband aufgewickelt wird, ist die Gefahr von Lufteinschlüssen und einer entsprechenden Porigkeit der Verstärkungsschicht praktisch gleich Null. Damit, daß für die zweite Verstärkungsschicht von dem Spulenträger ein schmaler Faserstrang auf den Dorn aufgewickelt wird und nicht etwa ein wesentlich breiteres Gewebeband, kommt die Ausrichtung der Fasern der zweiten Verstärkungsschicht dem Idealfall der rein tangentialen Ausrichtung sehr nahe. Das wird dadurch noch unterstützt, daß man zur Vermeidung von Unwuchten am Spulenträger in der Praxis mit wenigstens zwei Spulen arbeiten wird und dafür die Anzahl der Fasern eines jeden der beiden Faserstränge auf die Hälfte vermindern kann. Außerdem können diese Faserstränge so aufgewickelt werden, daß sie einander wenigstens zum Teil überdecken und somit eine weitere Annäherung an den Idealfall eintritt. Dadurch, daß die Fasern der zweiten Verstärkungsschicht von außen her in die zuvor aufgebrachte Kunstharzschicht eingebettet werden, ist wiederum das Einbetten von Luftbläschen praktisch ausgeschlossen. Außerdem sorgt die allein schon an den Führungselelementen für den Faserstrang auftretende Reibung dafür, daß der Faserstrang mit einer gewissen Grundspannung aufgewickelt wodurch er die axial ausgerichteten Fasern der darunterliegenden axialen Verstärkungsschicht zum Dorn hin verdichtet. Dadurch wird überschüssiges Kunstharz der ersten Verstärkungsschicht nach außen verdrängt, so daß der Harzanteil der axialen Verstärkungsschicht, aber auch der tangentialen Verstärkungsschicht, auf ein Kleinstmaß verringert wird. Dadurch verringert sich die Wanddicke dieser beiden Verstärkungsschichten und dementsprechend auch der auf sie entfallende Anteil am Metergewicht des fertigen Kunststoffrohres. Durch dieses Verdichten der beiden Verstärkungsschichten und durch das Herausquetschen des überschüssigen Kunstharzes werden auch die letzten Luftbläschen aus dem Bereich der Verstärkungsschichten verdrängt, die, wenn überhaupt, beim Einbetten der Fasern in die Kunstharzschicht je mit eingebettet worden sein sollten. Damit, daß auf die tangentiale Verstärkungsschicht wieder eine axiale Verstärkungsschicht folgt, deren axial verlaufende Fasern durch die Ringrakel in die zuvor aufgebrachte Kunstharzschicht oder auch in den durch das Verdichten der darunterliegenden Verstärkungsschichten noch vorhandene Überschuß an Kunstharz eingebettet werden und dabei auch verdichtet werden, wird auch die darunterliegende tangentiale Verstärkungsschicht vor allem im Bereich ihrer außenliegenden Fasern zusätzlich verdichtet. Das gilt wiederum ebenso auch für die zweite axiale Verstärkungsschicht, wenn anschließend darauf wiederum eine tangentiale Verstärkungsschicht aufgebracht wird. Dadurch, daß durch die entgegengesetzte Umlaufrichtung des betreffenden Spulenträgers die Fasern im umgekehrten Windungssinne wie bei der ersten tangentialen Verstärkungsschicht aufgewickelt werden, wird die unvermeidliche, aber sehr geringe Abweichung der Ausrichtung der Fasern von der rein tangentialen Ausrichtung ausgeglichen, zumal die beiden tangentialen Verstärkungsschichten aufgrund der aufeinander folgenden Verdichtungsvorgänge sehr dicht übereinander liegen. Damit, daß bei Bedarf in der gleichen Weise noch eine weitere axiale Verstärkungsschicht und eine weitere tangentiale Verstärkungsschicht aufgebracht werden kann und das sogar noch fortgesetzt werden kann, kann das spätere Kunststoffrohr in denkbar weitem Ausmaße für auf die Bewältigung höherer und höchster Anforderungen hinsichtlich seines mechanischen Verhaltens aufgebaut werden. Damit, daß auf die äußerste Verstärkungsschicht, die zweckmäßigerweise eine tangentiale Verstärkungsschicht ist, eine Außenhaut aufgebracht wird, kann das spätere Rohr auch mit solchen metallenen Fitting-Systemen verbunden oder angeschlossen werden, die zur Verbesserung der Dichtheit der Verbindungsstelle mit Ringkanten, Ringschneiden, Ringwülsten und dergleichen auf die Außenseite des Kunststoffrohres einwirken, ohne daß dabei die Gefahr gegeben ist, daß durch diese Fittingteile die Fasern der äußeren Verstärkungsschichten beschädigt oder zerstört werden. Außerdem wird mit dieser Außenhaut eine noch glattere Oberfläche des Kunststoffrohres erreicht als sie alleine schon durch die gewebeknotenfreie allein von parallelliegenden Fasern gebildete äußerste Verstärkungsschicht erreicht wird. Damit, daß auf die Außenhaut eine bandförmige Trennfolie aufgebracht und zu einem die Außenhaut umhüllenden Trennschlauch geformt wird, ist es möglich, das Kunststoffrohr durch eine Kalibriervorrichtung hindurchzuführen, wodurch zusätzlich zu der Kalibrierwirkung der Ringrakel für die Außenhaut eine nochmalige Kalibrierung möglich ist, ehe der Schichtaufbau des Kunststoffrohres in der Härtevorrichtung gehärtet wird und daraus dann das fertige Kunststoffrohr entsteht. Dadurch, daß der Dorn innerhalb der Härtevorrichtung endet und das Kunststoffrohr von dort an ohne ihn frei weiterbewegt wird, wird vermieden, daß die Reibungskraft zwischen dem erhärtenden und dabei erstarrenden Kunststoffrohr zu groß wird und es dann nur noch mit Mühe auf dem Dorn weitergezogen werden könnte. Damit, daß das kontinuierlich gefertigte Kunststoffrohr von der Trennvorrichtung in einzelne Längenabschnitte von einem bestimmten Längenmaß aufgeteilt wird, läßt sich das Kunststoffrohr sowohl beim Transport wie auch beim Herstellen einer Leitung leichter handhaben.

Bei einer Ausgestaltung des Verfahrens nach Anspruch 2 läßt sich bei der Herstellung der Stützschicht das dafür verwendete bandförmige Vlies auch mit unterschiedlicher Breite verarbeiten, indem einfach die Drehzahl des Spulenträgers und die Zuggeschwindigkeit des Kunststoffrohres unter Berücksichtigung der Bandbreite aufeinander abgestimmt werden. Bei der Ausgestaltung des Verfahrens nach Anspruch 3 wird das bandförmige Vlies dem Dorn in axialer Ausrichtung ohne Auftreten einer Umschlingungskraft zugeführt, so daß die Gefahr des Eindringens des Vlieses in die darunterliegende gelierte Innenhaut weiter vermindert ist. Damit lassen sich Schwankungen bei der Geliergeschwindigkeit des Kunstharzes für die Innenhaut besser auffangen. Eine Ausgestaltung des Verfahrens nach Anspruch 4 ermöglicht es, das Kunstharz für die Stützschicht im Rückenbereich des Dorns dann erst und erst an der Stelle aufzugießen, an der die beiden Vliesbänder von der Seite her dem Dorn wenigstens schon angenähert sind. Dabei kann die Leit-und Formvorrichtung für die beiden Vliesbänder auch dazu benutzt werden, die Ausbildung der Kunstharzschicht aus dem aufgegossenen Kunstharz zu unterstützen und dabei auch für eine gleichmäßige Verteilung des Kunstharzes zu sorgen.

Mit einer Variation des Verfahrens nach Anspruch 5 kann die Anzahl der Zufürvorrichtungen für das Kunstharz von drei zumindest bis auf zwei und sogar bis auf eine verringert werden und somit das Verfahren vereinfacht und verkürzt werden.

Mit einem Verfahren nach Anspruch 6 kann auch auf der Grundlage eines Kunststoff-Innenrohres ein faserverstärktes Kunststoffrohr mit den oben geschilderten Eigenschaften hergestellt werden. Damit lassen sich faserverstärkte Kunststoffrohre herstellen, deren Innenwand physikalische und/oder chemische Eigenschaften aufweisen, die möglicherweise bei einem Kunststoffrohr mit einer Innenhaut aus einem gelierbaren flüssigen Kunstharz nicht erreicht werden können. Das gleiche gilt für die Herstellung von Kunststoffrohren gemäß Anspruch 7 auf der Grundlage eines Kunststoff-Innenrohres, das bereits mit einer Haftschicht versehen ist, die schon im Zuge der Herstellung dieses Kunststoff-Innenrohres oder im Anschluß daran aufgebracht wurde.

Mit einer Ausgestaltung der drei Verfahren zum Herstellen von faserverstärkten Kunststoffrohren gemäß Anspruch 8 läßt sich auch bei der Herstellung der Verstärkungsschichten ab der dritten Verstärkungsschicht ein Teil der Zuführvorrichtungen für das Kunstharz einsparen und auch dort das Verfahren vereinfachen und beschleunigen.

Mit einer Einrichtung nach Anspruch 9 läßt sich das Verfahren nach Anspruch 1 besonders günstig und mit besonders gutem Ergebnis durchführen.

Mit einer Ausgestaltung der Einrichtung nach Anspruch 12 wird erreicht, daß die Ringrakel zum Bilden der Innenhaut immer genau auf den Dorn zentriert ist und daß sie allen Querbewegungen des Dorns folgt, die dieser infolge seiner Elastizität unter der Wirkung von Seitenkräften macht, die beim Aufwickeln der Faserstränge für die tangentialen Verstärkungsschichten möglicherweise auf ihn ausgeübt werden. Dadurch wird eine sehr hohe Gleichmäßigkeit der Wanddicke der Innenhaut und damit zugleich eine sehr genaue Zentrierung der Außenseite der Innenhaut in Bezug auf die Außenseite des Dorns erreicht, die auch eine sehr hohe Gleichmäßigkeit der Wanddicke der nachfolgenden Schichten des Kunststoffrohres nach sich zieht.

Mit einer Einrichtung nach Anspruch 13 läßt sich das Verfahren nach Anspruch 6 mit einem Kunststoff-Innenrohr sehr günstig durchführen. Dabei ersetzt das Kunststoff-Innenrohr die aus einem Kunstharz gebildete Innenhaut des Kunststoffrohres, wie es mit einer Einrichtung nach Anspruch 9 hergestellt wird. Bei der Einrichtung nach Anspruch 13 wird anstelle der wegen des Kunststoff-Innenrohres nicht benötigten Stützschicht eine Haft-und Pufferschicht auf das Kunststoff-Innenrohr aufgebracht, da dieses aus einem thermoplastischen Kunststoff hergestellt ist. Darauf würden die nachfolgenden Verstärkungsschichten häufig nicht oder nicht ausreichend gut haften. Das wird aber mit der Klebeharzschicht erreicht, die ganz auf die Eigenschaften des Kunststoff-Innenrohres abgestimmt werden kann, so daß eine gute Bindung zwischen dem Kunststoff-Innenrohr und dem zur Haft- und Pufferschicht gehörenden Vlies erzielt wird, mit dem wiederum die nachfolgenden Verstärkungsschichten eine gute Bindung eingehen.

Die Einrichtung nach Anspruch 13 eignet sich auch sehr gut zum Durchführen des Verfahrens nach Anspruch 7, indem die Zuführvorrichtung für das Klebeharz und die Abspulvorrichtung für das Vlies der Haft- und Pufferschicht außer Betrieb bleiben und erforderlichenfalls beiseite geschoben werden.

Die nachfolgenden Angaben gelten sowohl für die Einrichtung nach Anspruch 9 wie auch für die Einrichtung nach Anspruch 13 in beiden Variationen.

Bei einer Ausgestaltung der Einrichtung nach Anspruch 14 wird erreicht, daß das Kunstharz in einer Zuführvorrichtung ständig umgewälzt wird, soweit es nicht in einer oder mehreren der Schichten des Kunststoffrohres als Tränkharz verbleibt. Durch das ständige Umwälzen des Kunstharzes wird vermieden, daß es sich, beispielsweise im Vorratsbehälter, zum Teil absetzt und daß in dieser Teilmenge des Kunstharzes möglicherweise chemische Reaktionen stattfinden, die zum Anhärten oder gar zum Aushärten dieser Kunstharzteilmenge führen könnten die auch auf die übrige Kunstharzmenge übergreifen könnten. Außerdem wird durch das ständige Umwälzen des Kunstharzes das Vermischen der entweder stetig oder portionsweise zugegebenen Ergänzungsmenge des Kunstharzes mit der umgewälzten Grundmenge erleichtert und so die Gleichmäßigkeit der Konzistenz des Kunstharzes erhöht.

Bei einer Ausgestaltung der Einrichtung nach Anspruch 15 wird das Vlies zum Bilden der Stützschicht in zwei Teilbahnen jeweils von der Seite her an den Dorn (bzw. an das Kunststoff-Innenrohr) herangeführt und mittels der Leit-und Formvorrichtung in axialer Richtung verlaufend zu jeweils einem halben Kreiszylinder verformt. Dadurch werden umlaufende Seitenkräfte vermieden, die beim Aufwickeln des Vlieses mittels eines Spulenträgers auftreten würden. Mit einer Weiterbildung der Einrichtung nach Anspruch 17 wird das Vorhandensein zweiter seitlich herangeführter Teilbahnen des Vlieses dazu ausgenutzt, das Kunstharz für die Stützschicht erst verhältnismäßig spät auf die Innenhaut und zwischen diese und das Kunststoffvlies aufzugießen bzw. einzugießen.

Eine Ausgestaltung der Einrichtung nach Anspruch 18 ermöglicht es, die Faserstränge für eine axiale Verstärkungsschicht sehr gleichmäßig um den Dorn herum zunächst zu einem kegelstumpfförmigen Mantel aus Fastersträngen und ab dem Leitring zu einem ebenso gleichmäßigen kegelstumpfförmigen Fasermantel zu formen, was zu einem sehr gleichmäßigen Aufbau der axialen Verstärkungsschicht führt.

Mit einer Ausgestaltung der Einrichtung nach Anspruch 19 wird der Abstand zwischen der Aufgabestelle des Kunstharzes und derjenigen Stelle verringert, an der die Fasern des Fasermantels in die aus dem Kunstharz gebildete Kunstharzschicht eingebettet werden. Dadurch wird vermieden, daß selbst bei Kunstharzen mit geringerer Viskosität das Kunstharz vorzeitig von der darunterligenden Schicht des Kunststoffrohres nach unten abläuft und im Rückenbereich des Kunststoffrohres möglicherweise ein Kunstharzmangel auftritt.

Mit einer Ausgestaltung der Einrichtung nach Anspruch 20 und ebenso auch mit einer Ausgestaltung der Einrichtung nach Anspruch 21 wird jeweils ein sehr kompakter Aufbau des betreffenden Abschnittes der Einrichtung erreicht, weil für das Bilden der Stützschicht und der nachfolgenden beiden Verstärkungsschichten bzw. für die jeweils gruppenweise gebildete axiale Verstärkungsschicht und tangentiale Verstärkungsschicht jeweils nur noch eine Zuführvorrichtung für das Kunstharz erforderlich ist, wobei sich auch die Menge der Auffangwannen und der verschiedenen Verbindungsleitungen entsprechend verringert oder diese Teile entsprechend kleiner ausgeführt werden können. Außerdem verkürzt sich dadurch die Herstellungszeit für das Kunststoffrohr.

Bei einer Ausgestaltung der Einrichtung nach Anspruch 22 können infolge der Erhöhung der Anzahl der Spulen am Spulenträger und damit infolge der Erhöhung der Anzahl der Faserstränge für eine tangentiale Verstärkungsschicht die Anzahl der Fasern je Faserstrang im umgekehrten Verhältnis zur Anzahl der Faserstränge vermindert werden, wodurch wiederum der Steigungswinkel beim Aufwickeln der Faserstränge verringert werden kann und noch mehr dem Idealfall der rein tangentialen Aufwicklung angenähert werden kann. Mit der Bremsvorrichtung an jeder Spule wird erreicht, daß die Faserstränge für die tangentiale Verstärkungsschicht mit einer größeren Vorspannung aufgewickelt werden, als das alleine mit der durch die ohnehin vorhandene Reibung der Faserstränge an den Leitvorrichtungen auftretende Grundspannung möglich ist. Durch die erhöhte Vorspannung der tangentialen Faserstränge werden die axialen Fasern der darunterliegenden Verstärkungsschicht in erheblichem Maße zusätzlich verdichtet, wobei außerdem auch die tangentialen Faserstränge in sich stärker verdichtet werden. In beiden Verstärkungsschichten wird dabei durch die Verringerung der Zwischenräume zwischen den Fasern das dadurch überschüssige Kunstharz aus der Verstärkungsschicht herausgequetscht und so der Harzanteil der Verstärkungsschichten verringert. Außerdem wird dadurch eine zusätzliche Entlüftung der beiden Verstärkungsschichten bewirkt, soweit das überhaupt erforderlich ist.

Bei einer Ausgestaltung der Einrichtung nach Anspruch 23 wird einerseits über die gemeinsame Antriebswelle eine Koppelung der Umlaufbewegung der Spulenträger untereinander erreicht und andererseits durch die stufenlos einstellbaren Getriebe eine Anpassung der Umlaufgeschwindigkeit eines jeden der Spulenträger an den an seinem Einsatzzort vorhandenen Wickeldurchmesser ermöglicht.

Durch eine Ausgestaltung der Einrichtung nach Anspruch 24 erhalten die Faserstränge für die axialen Verstärkungsschichten eine zusätzliche Vorspannung, die über die durch die Reibung der Faserstränge an den Leitvorrichtungen ohnehin entstehende Grundspannung hinausgeht. Dadurch wird vermieden, daß die in ihrer Kunstharzschicht schon eingebetteten axialen Fasern beim Aufwickeln der tangentialen Faserstränge und insbesondere bei der durch diese tangentialen Faserstränge bewirkten Verdichtung der axialen Fasern in Umfangsrichtung verschoben werden.

Durch eine Ausgestaltung der Einrichtung nach Anspruch 25 wird vermieden, daß ein beim Härten des Kunststoffrohres aus dem Längsspalt des äußeren Trennschlauches möglicherweise austretende geringe Kunstharzmenge zwischen den Trennschlauch und die Wand des Führungsrohres hineingedrückt wird und dadurch den äußeren Trennschlauch mit dem Führungsrohr verklebt oder zumindest die Reibung zwischen dem Trennschlauch und dem Führungsrohr in stärkerem Maße erhöht.

Bei einer Ausgestaltung der Einrichtung nach Anspruch 26 wird ohne besondere Maßnahmen ein gleichmäßiges Aushärten des Kunststoffrohres ermöglicht. Das gleiche wird auf einer etwas längeren Strecke auch bei einer Ausgestaltung der Einrichtung nach Anspruch 27, bei der anstelle des merklich teureren Infrarotlicht-durchlässigen Glasrohres ein gelochtes Metallrohr verwendet wird.

Bei einer Ausgestaltung der Einrichtung nach Anspruch 29 wird mit den Kettenförderern, die mit Mitnehmerstollen aus einem Elastomer bestückt sind, eine sowohl wirkungsvolle, wie auch schonende Zugbewegung auf das Kunststoffrohr ausgeübt. die eine zuverlässige Bewegung des Kunststoffrohres durch alle Arbeitsstationen hindurch gewährleistet.

Bei einer Ausgestaltung der Einrichtung nach Anspruch 30 wird die Trennvorrichtung während eines Trennvorganges vom Kunststoffrohr selbst mitgenommen, wobei zugleich die Rohrabschnitte zu beiden Seiten der Trennstelle auch bei fortschreitendem Trennschnitt gleichbleibendem Abstand zueinander gehalten werden, so daß weder ein Stauchen, noch ein Auseinanderziehen der Rohre an der Trennstelle eintreten kann. Durch eine Ausgestaltung der Einrichtung nach Anspruch 31 wird auf einfache Weise eine automatische Rückführung der Trennvorrichtung nach dem Lösen der Klemmvorrichtungen erreicht, weil der pneumatische Kolbenantrieb so eingestellt werden kann, daß er bei stetiger Beaufschlagung durch das pneumatische Druckmedium bei gelösten Klemmvorrichtungen die Bremsvorrichtung in ihre Ausgangsstellung zurückzuschieben vermag und er bei geschlossenen Klemmvorrichtungen umgekehrt ausreichend nachgiebig ist, um das Mitwandern der Trennvorrichtung mit dem Kunststoffrohr zu ermöglichen.

Durch eine Ausgestaltung der Einrichtung nach Anspruch 32 wird der Außendurchmesser des Dorns abschnittweise an die Schrumpfung des Kunststoffrohres, genauer gesagt, des Rohlings des Kunststoffrohres angepaßt, die im Bereich der Aufwickelstellen der Faserstränge für die tangentialen Verstärkungsschichten und im Bereich der Härtevorrichtung auftritt. Dadurch wird die Reibung des Kunststoffrohres auf dem Dorn erheblich verringert. Das verringert dann auch die erforderliche Zugkraft, um das Kunststoffrohr durch die gesamte Einrichtung hindurchzuziehen. Außerdem wird dadurch die Haltekraft für den Dorn und seine Zugbelastung verringert. Durch die Verringerung der Reibung zwischen dem Kunststoffrohr und dem Dorn wird außerdem der Gefahr von intermitierenden Schlupfbewegungen (dem sogenannten stickslip) des Kunststoffrohres auf dem Dorn vorgebeugt.

Bei einer Ausgestaltung der Einrichtung nach Anspruch 33 wird die Fertigung des Dorns vereinfacht und erleichtert. Außerdem wird im Bedarfsfalle der Austausch einzelner Längenabschnitte erleichtert, die etwa schneller als die anderen Längenabschnitte verschleißen oder die aus sonstigen Gründen ausgetauscht werden müssen. Durch die Aufteilung des Dorns in Einzelstücke lassen sich auch die Durchmesserstufen leichter herstellen, weil die Einzelstücke dann im allgemeinen über ihre ganze Länge denselben Durchmesser haben können.

Bei einer Ausgestaltung der Einrichtung nach Anspruch 34 wird durch die Zuführung eines Druckgases in den Innenraum des Dorns und durch dessen anschließendes Austreten durch die über die Längserstreckung des Dorns verteilten Durchgangslöcher je eine pneumatische Schmiermittelschicht aufgebaut. Durch sie wird ebenfalls die Reibung des Kunststoffrohres auf dem Dorn verringert.

Bei einer Ausgestaltung der Einrichtung nach Anspruch 35 kann der Überdruck des Druckgases in diesem Längenabschnitt des Dorns unabhängig von dem Überdruck in den vorangehenden Längenabschnitten eingestellt werden. Damit kann der Überdruck in diesem Längenabschnitt besser auf die dort auftretenden Erfordernisse eingestellt werden, die sich vor allem dadurch ergeben, daß im Bereich der Härtevorrichtung die Schrumpfung des Kunststoffrohres am größten ist und je nach den verwendeten Kunstharzen und je nach dem Verlauf des Härtevorganges unterschiedlich sein kann.

Bei einer Ausgestaltung der Einrichtung nach Anspruch 36 kann die Überschußmenge des Kunstharzes leichter abgeführt werden und so eine einwandfreie Ausbildung der Außenhaut des Kunststoffrohres sicherer erreicht werden. Außerdem läßt sich dadurch der Außendurchmesser des Kunststoffrohres genauer einstellen oder, mit anderen Worten, eine geringere Durchmessertoleranz des Kunststoffrohres erreichen. Durch den Restpalt sowohl bei der Leit- und Formvorrichtung wie auch bei der anschließenden Ringrakel wird außerdem der Gefahr vorgebeugt, daß das Kunstharz sich beim Abstreifen womöglich über die Außenseite der Trennfolie hin verteilt und daran haften bleibt und sich anschließend in der Härtevorrichtung mit der Trennfolie fest verbindet. Das wird durch eine Weiterbildung der Einrichtung nach Anspruch 37 zusätzlich unterstützt.

Die Erfindung wird im folgenden anhand eines in der Zeichnung dargestellten Ausführungsbeispieles, einschließlich einer Abwandlung davon, näher erläutert. Es zeigen:

Fig. 1 bis 5 je einen Abschnitt einer weitgehend schematischen Seitenansicht der Einrichtung zum kontinuierlichen Herstellen faserverstärkter Kunststoffrohre;

Fig. 6 den ersten Abschnitt einer Seitenansicht einer teilweise abgewandelten Ausführungsform der Einrichtung;

Fig. 7 eine ausschnittweise dargestellte Draufsicht einer Ringrakel der Einrichtung nach Fig. 1;

Fig. 8 eine ausschnittweise dargestellte Draufsicht einer kombinierten Arbeitsstation der Einrichtung nach Fig. 1;

Fig. 9 eine Seitenansicht bzw. einen Längsschnitt einer Leit- und Formvorrichtung und einer Ringrakel der Einrichtung nach Fig. 1;

Fig. 10 eine Untersicht der Leit- und Formvorrichtung und der Ringrakel nach Fig. 9;

Fig. 11 eine Stirnansicht der Leit- und Formvorrichtung und der Ringrakel nach Fig. 9 und 10.

Die Einrichtung 10 weist einen Maschinenteil 11 mit einer Anzahl Arbeitsstationen und Vorrichtungen und ein Regalgatter 12 auf, das an der Stirnseite des Maschinenteils weitgehend getrennt von diesem aufgestellt ist.

Im Regalgatter 12 sind eine größere Anzahl Spulen 13 mit Fasersträngen 14 untergebracht, die aus einer mehr oder minder großen Anzahl von Glasfasern, Kohlefasern oder Textilfasern gebildet sind. Die Spulen 13 sind mit lotrecht ausgerichteter Spulenachse aufgestellt, so daß ein Innenabzug der Faserstränge 14 möglich ist. Zu diesem Zweck sind am Regalgatter 12 zahlreiche Leitvorrichtungen 15 angeordnet, durch die die Faserstränge von den Spulen 13 abgezogen werden und zum Maschinenteil 11 hingeleitet werden. Auch zwischen dem Regalgatter 12 und dem Maschinenteil 11 sind solche Leitvorrichtungen 15 vorhanden, die der Übersichtlichkeit wegen nur zum Teil dargestellt oder angedeutet sind.

Der Maschinenteil 11 weist ein Grundgestell 16 auf, das sich über die gesamte Länge des Maschinenteils 11 erstreckt und das alle zum Maschinenteil 11 gehörenden Vorrichtungen in der richtigen gegenseitigen räumlichen Zuordnung aufnimmt. Von dem Grundgestell 16 sind, mit Rücksicht auf die Übersichtlichkeit der Darstellung, nur wenige Teile dargestellt, darunter ein Bodenrahmen 17, eine in einem gewissen Abstand oberhalb des Bodenrahmens 17 angeordnete Längsstrebe 18 und einige Pfosten 19.

Am Anfang des Grundgestells 16 ist eine Haltevorrichtung 21 vorhanden, die mit dem Grundgestell 16 fest verbunden ist. Die Haltevorrichtung 21 hält den Anfang eines Dorns 22 fest, der waagerecht ausgerichtet ist und der von der Haltevorrichtung 21 aus fliegend angeordnet ist und sich durch eine ganze Reihe der Arbeitsstationen und Vorrichtungen hindurcherstreckt. Der Dorn ist als kreiszylindrischer Hohlkörper ausgebildet.

An der Stirnseite des Grundgestells 16 ist eine Abspulvorrichtung 23 angeordnet, die mit waagerecht und quer zur Längserstreckung des Grundgestells ausgerichteter Achse eine Spule 24 einer bandförmig aufgewickelten Trennfolie 25 aufnimmt. Die Trennfolie 25 wird über eine Leitvorrichtung 26 einer Formvorrichtung 27 zugeleitet, mittels der die in axialer Richtung über den Dorn 22 freihängend hinweggezogene Trennfolie 26 zu einem den Dorn 22 umgebenden Trennschlauch geformt wird. In der Nähe der Formvorrichtung 27 ist eine Verbindevorrichtung 28 vorhanden, die eine Abspulvorrichtung 29 aufweist, von der ein Klebeband 31 abgezogen wird und mittels einer Andrückrolle 32 an die aneinander anstoßenden oder einander geringfügig überlappenden Ränder des Trennschlauches angedrückt wird und dadurch die Ränder der Trennfolie für Kunstharz undurchlässig miteinander verbindet.

Die Verbindevorrichtung 28 kann auch dahingehend abgewandelt sein, daß anstelle der Andrückrolle 32 ein Schweißschuh einer Ultraschall-Schweißvorrichtung gegen die einander überlappenden Ränder der Trennfolie angedrückt wird und dabei die Ränder der Trennfolie 25 miteinander verschweißt werden und so der Trennschlauch gebildet wird.

Eine Zuführvorrichtung 33 für ein Kunstharz weist einen Vorratsbehälter 34 für das Kunstharz, eine Umwälzpumpe 35 und verschiedene Leitungen 36 auf. Von einem oberen Zwischenbehälter 37 aus führt ein Zuführrohr 38 das Kunstharz zum Dorn 22 hin. Die Mündung 39 des Zuführrohres 38 ist an der Oberseite des Dorns 22 in dessen vertikaler Meridianebene angeordnet, von der aus das Kunstharz auf den Trennschlauch aufgegossen wird und sich dann nach beiden Seiten hin gleichmäßig verteilt und eine geschlossene Kunstharzschicht bildet. Einige der Teile der Zuführvorrichtung 33 sind von einer kastenförmigen Verkleidung 40 umgeben, deren Stirnwände in der Fluchtlinie des Dorns 22 eine Durchlaßöffnung für den Dorn 22 haben. Ein Teil der Verkleidung 40 ist aufklappbar ausgebildet, damit der Innenraum zugänglich ist.

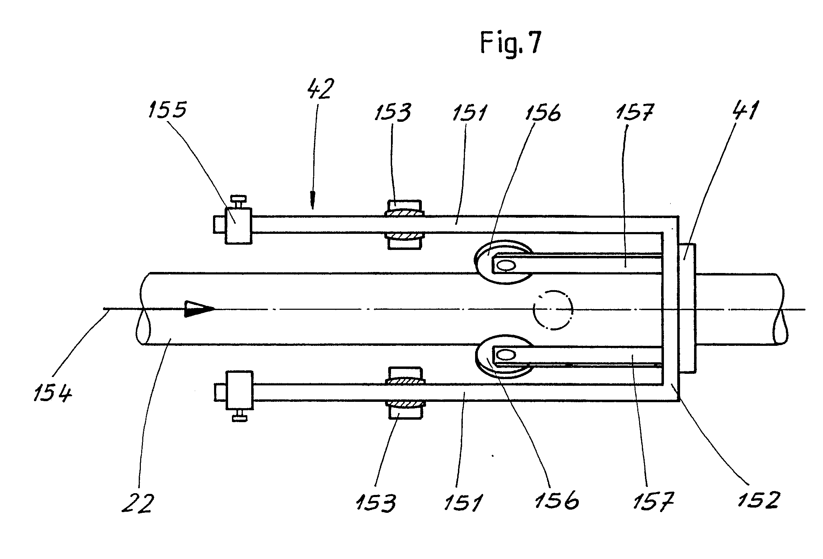

In der Zugrichtung des späteren Kunststoffrohres ist im Anschluß an die Mündung 39 eine ringförmige Rakel angeordnet, die im folgenden kurz als Ringrakel 41 bezeichnet wird, ähnlich wie auch die später beschriebenen ringförmige Rakeln. Diese Ringrakel 41 ist an einer Führungsvorrichtung 42 angeordnet, die später anhand von Fig. 7 näher erläutert wird. Durch diese Führungsvorrichtung 42 wird die Ringrakel 41 in der Längsrichtung des Dorns unverschieblich und in der Normalebene dazu stets mittig zum Dorn 22 geführt. Von der Ringrakel 41 wird das mittels der Zuführvorrichtung 33 auf den Trennschlauch aufgegossene Kunstharz zu einer ringförmigen gleichmäßig dicken Kunstharzschicht geformt. Diese Kunstharzschicht wird in einer anschließenden Erwärmungsvorrichtung 43 erwärmt und dadurch aktiviert, so daß diese Kunstharzschicht zu einer Innenhaut des späteren Kunststoffrohres geliert.

Unterhalb der Mündung 39 des Zuführrohres 38 und unterhalb der Ringrakel 41 ist eine gemeinsame Auffangwanne 44 angeordnet, die das vom Trennschlauch abtropfende oder von der Ringrakel 41 abgestreifte Kunstharz auffängt und es wieder zum Vorratsbehälter 34 zurück führt. In der Erwärmungsvorrichtung 43 ist ebenfalls eine Auffangwanne 45 vorhanden, die die beim Gelieren der Innenhaut aus dieser austretenden Reagenzien auffängt. Von dort werden diese Reagenzien einschließlich ihrer infolge der Erwärmung sich bildenden Dämpfe von einem Gebläse 46 aus der Erwärmungsvorrichtung 43 abgesaugt und in einem Filter 47, vorzugsweise in Form eines Aktivkohlefilters, aufgefangen. Die gereinigte Trägerluft wird frei ausgeblasen. Das Absaugen der Dämpfe wird durch eine kastenförmige Verkleidung 50 unterstützt, die ähnlich der Verkleidung 40 ausgebildet ist.

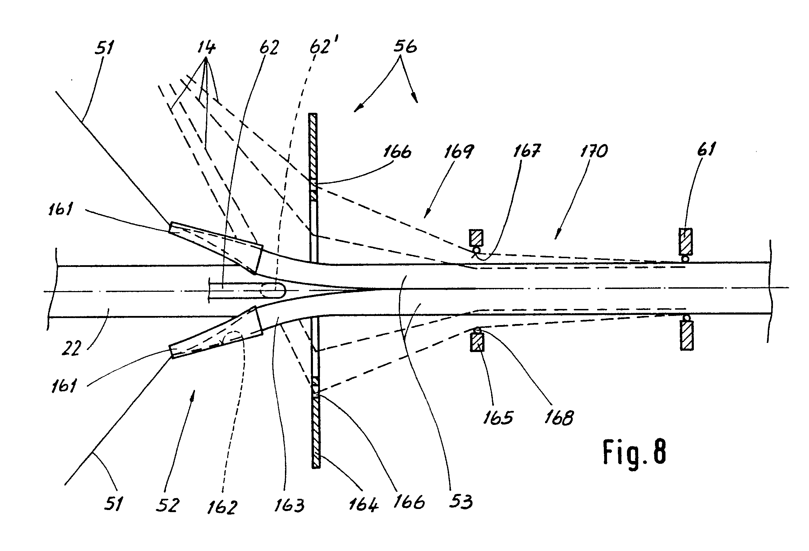

Nach der Erwärmungsvorrichtung 43 ist eine Abspulvorrichtung 48 vorhanden, die zwei Spulen 49 eines bandförmigen Vlieses 51 aufweist. Die Abspulvorrichtung 48 ist mit einer Leit- und Formvorrichtung 52 verbunden, mittels der die beiden Vliesbänder 51 von der Abspulvorrichtung 48 zum Dorn 22 hingeleitet werden und dort zu je einer halbzylindrischen Hälfte eines in Längsrichtung an zwei diametral gelegenen Stellen offenen Schlauches 53 geformt werden, wie später anhand Fig. 8 näher erläutert wird.

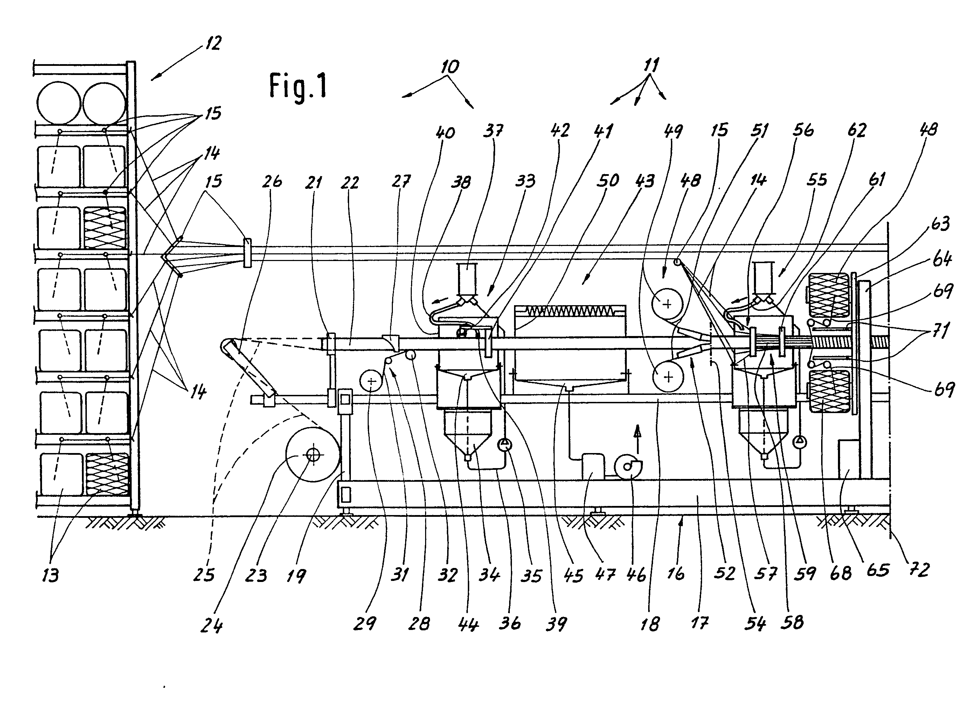

Bei der Abspulvorrichtung 48 und der Leit- und Formvorrichtung 52 ist zu beachten, daß diese in Fig. 1 um 90° um die Längsachse des Dorns 22 geschwenkt dargestellt ist und sie in Wirklichkeit in der durch die Längsachse des Dorns hindurchgehenden Horizontalebene ausgerichtet ist. Daher wird der durch die Leit- und Formvorrichtung 52 gebildete Schlauch 53 (Fig. 8) in Fig. 1 durch die Strichpunktlinie 54 begrenzt. Wegen der verschwenkten Darstellung ist die Abspulvorrichtung 48 und die mit ihr verbundene Leit- und Formvorrichtung 52 von den nachfolgenden Vorrichtungen in axialer Richtung zurückversetzt dargestellt. Ihre wahre Zuordnung in axialer Richtung geht aus Fig. 8 hervor.

In der Wirklichkeit ist in enger Nachbarschaft mit der Leit-und Formvorrichtung 52 eine weitere Zuführvorrichtung 55 für ein Kunstharz angeordnet, die weitestgehend gleich der Zuführvorrichtung 33 ausgebildet ist, weshalb hinsichtlich ihrer Einzelheiten auf deren Beschreibung verwiesen wird.

In räumlicher Nähe zur Zuführvorrichtung 55 ist eine Leit-und Formvorrichtung 56 vorhanden, die ebenfalls anhand Fig. 8 näher erläutert wird. Diese Leit- und Formvorrichtung 56, die den Dorn 22 außen umgibt, leitet einen Teil der vom Regalgatter 12 abgezogenen Faserstränge 14 zum Dorn 22 hin und ordnet sie zunächst als Faserstränge 57 entlang der Mantelfläche eines Kegelstumpfes an und leitet anschließend die Fasern 58 dieser Faserstränge 57 in Form eines geschlossenen kegelstumpfförmigen Fasermantels 59 einer Ringrakel 61 zu. Von dieser Ringrakel 61 werden die Fasern 58 des Fasermantels 59 in die Kunstharzschicht eingebettet, die sich aus dem Kunstharz gebildet hat, das zuvor von der Zuführvorrichtung 55 über ihr Zuführrohr 52 auf die Innenhaut des Kunststoffrohres aufgegossen wurde. Diese Kunstharzschicht und die in axialer Ausrichtung darin eingebetteten Fasern 58 bilden zusammen eine erste Verstärkungsschicht für das Kunststoffrohr, die wegen der axialen Ausrichtung ihrer Fasern als axiale Verstärkungsschicht bezeichnet wird.

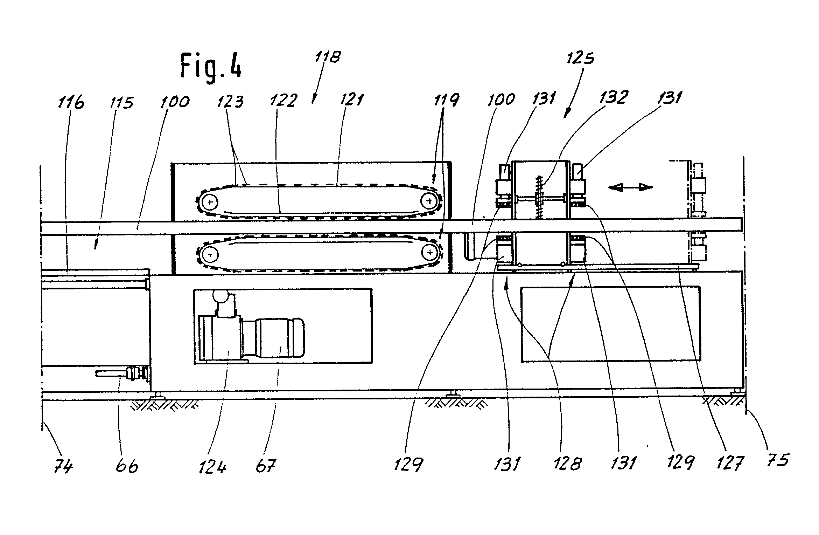

Das über das Zuführrohr 62 auf die Innenhaut aufgegossene Kunstharz wurde mit einem über das Aufnahmevolumen der Vliesbahnen 51 für die Stützschicht hinausgehenden Überschuß aufgegossen, der so groß ist, daß er nicht nur für die erste axiale Verstärkungsschicht ausreicht, sondern darüber hinaus auch noch Kunstharz für die nächste Verstärkungsschicht übrigbleibt. Diese wird unmittelbar im Anschluß an die erste axiale Verstärkungsschicht gebildet. Dafür ist in der Nachbarschaft der Zuführvorrichtung 55 für das Kunstharz ein kranzförmiger Spulenträger 63 vorhanden, der den Dorn 22 außen umgibt und der mittels Kranzlager an einem Lagergestell 64 drehbar gelagert ist. Der Spulenträger 63 wird über ein stufenlos einstellbares oder regelbares Getriebe 65 von einer gemeinsamen Antriebswelle 66 angetrieben, die in Fig. 4 angedeutet ist und sich von dem dort angeordneten Antriebsmotor 67 aus entlang den Grundgestell 16 zu allen angetriebenen Vorrichtungen hin, darunter bis zum Getriebe 65 des Spulenträgers 63, erstreckt.

Der Spulenträger 63 weist eine geradzahlige Anzahl von Spulen 68 aus je einem Faserstrang 69 auf, die am Spulenträger 63 drehbar gelagert sind. In Fig. 1 sind der Übersichtlichkeit halber nur zwei Spulen 68 dargestellt. In Wirklichkeit sind es zweckmäßigerweise wenigstens vier Spulen oder auch sechs Spulen.

Am Spulenträger 63 sind Leitvorrichtungen 71 angeordnet, mittels der der Faserstrang 69 jeder der Spulen 68 zum Dorn 22 hingeleitet werden. Sobald der Spulenträger 63 um den Dorn 22 umläuft, wickeln sich die Faserstränge 69 auf die darunterliegende axiale Verstärkungsschicht auf, wobei sie in der Überschuß des Kunstharzes eingebettet werden, das weder von der Stützschicht noch von der ersten axialen Verstärkungsschicht aufgenommen wurde und das aus dem durch die Vliesbänder 51 gebildeten Vliesschlauch und aus dem Fasermantel der ersten Verstärkungsschicht heraus nach außen ausgetreten ist.

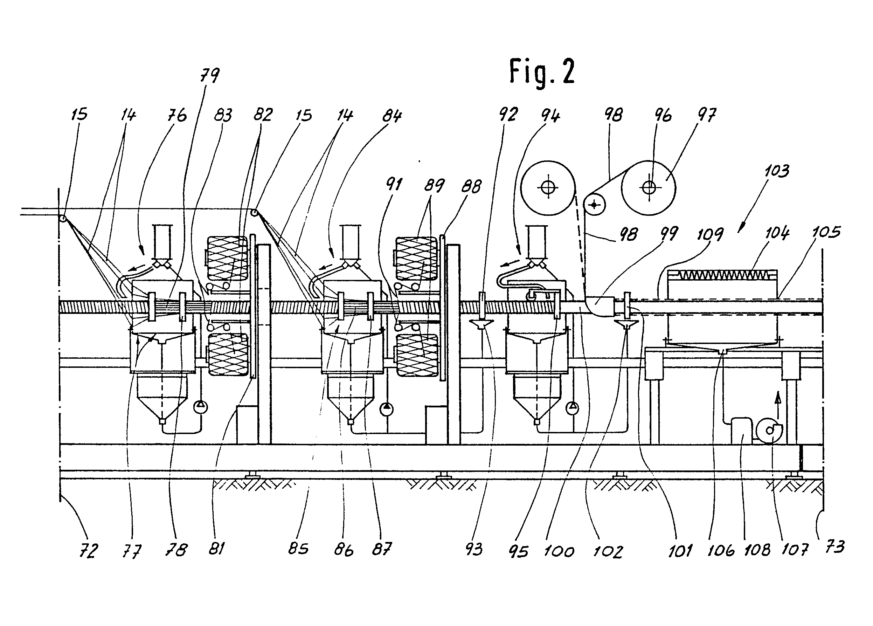

An der aus Formatgründen notwendigen rein zeichentechnischen Trennstelle 72, die durch eine Strichpunktlinie dargestellt ist, schließen die weiteren Vorrichtungen an, die auf Seite 2 dargestellt sind. Gleiches gilt für die weiteren Trennstellen 73 ... 75 in Fig. 2 ... 5.

Im Anschluß an den Spulenträger 63 ist eine weitere Zuführvorrichtung 76 für ein flüssiges Kunstharz vorhanden, die gleich der Zuführvorrichtung 55 ausgebildet ist. Im Bereich dieser Zuführvorrichtung 76 ist eine Leit- und Formvorrichtung 77 angeordnet, die gleich der Zuführvorrichtung 59 ausgebildet ist. Dazu kommt noch eine Ringrakel 78, die gleich der Ringrakel 61 ausgebildet ist, wobei allerdings die lichte Weite der Ringrakel 78 etwas größer als diejenige der Ringrakel 61 ist. Durch die Zuführvorrichtung 76 wird eine Kunstharzschicht aufgeossen, zu der von der Leit- und Formvorrichtung 77 die vom Regalgatter 12 herangeleiteten Faserstränge 14 in Form eines kegelstumpfförmigen Fasermantels 79 hingeleitet werden und durch die Ringrakel 78 in die Kunstharzschicht eingebettet werden. Dadurch entsteht eine zweite axiale Verstärkungsschicht.

In der Nachbarschaft der Zuführvorrichtung 76 ist ein weiterer Spulenträger 81 mit mehreren Spulen 82 vorhanden, der gleich dem Spulenträger 73 ausgebildet ist. Die von den Spulen 82 abgezogenen Faserstränge 83 werden beim Umlauf des Spulenträgers 81 auf die darunter liegende zweite axiale Verstärkungsschicht aufgewickelt und in die Kunstharzschicht eingebettet, die durch die Zuführvorrichtung 76 zuvor mit einer entsprechenden Überschußmenge aufgegossen wurde. Der Spulenträger 81 läuft im entgegengesetzten Drehsinne zum Spulenträger 63 um. Durch die Zuführvorrichtung 76 und den Spulenträger 81 wird eine zweite tangentiale Verstärkungsschicht gebildet.

Danach ist eine weitere Zuführvorrichtung 84 für ein Kunstharz vorhanden, die wiederum gleich der Zuführvorrichtung 76 ausgebildet ist und durch die eine Kunstharzschicht mit einer gewissen Überschußmenge auf die zweite tangentiale Verstärkungsschicht aufgegossen wird. Durch eine Leit- und Formvorrichtung 85 werden Faserstränge 14 in Form eines kegelstumpfförmigen Fasermantels 86 zur Außenseite der zweiten tangentialen Verstärkungsschicht hingeleitet und durch eine Ringrakel 87 in die Kunstharzschicht eingebettet. Mittels eines danach folgenden dritten Spulenträgers 88 mit mehreren Spulen 89 werden deren Faserstränge 91 auf die nach der Ringrakel 87 gebildete dritte axiale Verstärkungsschicht aufgewickelt und in den Kunstharzüberschuß eingebettet und so eine dritte tangentiale Verstärkungsschicht gebildet.

Falls es erwünscht oder erforderlich sein sollte, können durch eine oder mehrere weitere Gruppen von je einer Zuführvorrichtung für ein flüssiges Kunstharz, einer Leit- und Formvorrichtung für einen axial ausgerichteten kegelstumpfförmigen Fasermantel, eine Ringrakel zum Einbetten dieses Fasermantels in die Kunstharzschicht und einen Spulenträger zum tangentialen Aufwickeln mehrerer Faserstränge je eine weitere axiale und tangentiale Verstärkungsschicht gebildet werden.

Im Anschluß an den letzten Spulenträger 88 ist eine Ringrakel 92 vorhanden, unter der eine Auffangwanne 93 angeordnet ist. Damit wird etwa noch vorhandenes überschüssiges Kunstharz von der Außenseite der äußersten tangentialen Verstärkungsschicht abgestreift, die durch den Spulenträger 88 gebildet wurde.

Im Anschluß an die Ringrakel 92 ist eine weitere Zuführvorrichtung 94 vorhanden, die weitestgehend gleich der ersten Zuführvorrichtung 33 ausgebildet ist. Durch die Zuführvorrichtung 94 wird ein Kunstharz für eine Außenhaut auf die äußerste tangentiale Verstärkungsschicht aufgegossen. Dieses Kunstharz wird mittels einer Ringrakel 95 zur Außenhaut des Kunststoffrohres geformt. Diese Ringrakel 95 ist in gleicher Weise wie die Ringrakel 41 mittels einer Führungsvorrichtung geführt, die in Verbindung mit der Ringrakel 41 in Fig. 7 näher erläutert wird.

Oberhalb des Dorns 22 ist im Anschluß an die Ringrakel 95 eine Abspulvorrichtung für eine bandförmige auf einer Spule 97 aufgewickelte Trennfolie 98 angeordnet. Mittels einer sattelförmigen Leit- und Formvorrichtung 29 wird die Trennfolie 98 von oben her auf das bis auf das Aushärten fertige Kunststoffrohr 100 hingeleitet und dabei zu einem Schlauch geformt, der die Außenhaut des Kunststoffrohres 100 außen umgibt. Dieser Schlauch, der einen äußeren Trennschlauch für das Kunststoffrohr 100 bildet, ist an der Unterseite in Längsrichtung offen, wobei die Ränder der Trennfolie stumpf aneinander stoßen. Die Breite der Trennfolie 98 muß daher auf den äußeren Umfang der Außenhaut des Kunststoffrohres 100 abgestimmt sein.

Nach der Leit- und Formvorrichtung 99 ist nochmals eine Ringrakel 101 mit einer darunter angeordneten Auffangwanne 102 vorhanden. Diese Ringrakel 101 streift diejenige Kunstharzmenge ab, die beim Formen und Anlegen des äußeren Trennschlauches an das Kunststoffrohr 100 unter Umständen durch den Längsschlitz des äußeren Trennschlauches nach außen verdängt wird. Aus diesem Grunde ist in Wirklichkeit die Ringrakel 101 unmittelbar neben der Leit- und Formvorrichtung 99 angeordnet und in Fig. 2 nur der Deutlichkeit halber in einiger Entfernung dargestellt.

An die Leit- und Formvorrichtung 99 und die Ringrakel 101 schließt eine Härtevorrichtung 103 an. Diese weist Wärmequellen und oder Strahlungsquellen 104 auf, die am zweckmäßigsten als Infrarotstrahler ausgebildet sind. Diese Strahlungsquellen 104 umgeben das Kunststoffrohr 100 ringsum, wobei in Fig. 2 zur Vermeidung von Mißverständnissen der unten gelegene Teil der Strahlungsquellen 104 weggelassen wurde.

Die Härtevorrichtung 103 ist mit einer kastenförmigen Verkleidung 105 ausgerüstet, die zugleich der Wärmedämmung dient, um das Abstrahlen oder Austreten der Wärmeenergie der Strahlungsquellen 104 nach Möglichkeit zu vermeiden.

Im unteren Bereich der Härtevorrichtung 103 ist eine Auffangwanne oder Sammelwanne 106 angeordnet, durch die diejenigen Reagenzien oder Dämpfe, die beim Härten aus dem Kunststoffrohr 100 austreten, aufgefangen bzw. gesammelt werden und von einem Gebläse 107 abgesaugt werden und in einen Filter 108 hieingelitet werden, wo sie aus der Trägerluft ausgefiltert werden, die in gereinigtem Zustand frei ausgeblasen wird.

Die Härtevorrichtung 103 weist außerdem ein Führungsrohr 109 auf, das in Fig. 2 durch eine gestrichelte Linie dargestellt ist, weil es mit einer größeren Anzahl von Durchgangslöchern versehen ist, die in Längsrichtung und in der Umfangsrichtung versetzt zueinander angeordnet sind. Durch diese Durchgangslöcher wird das Führungsrohr 109 für die Wärme und für die Infrarotstrahlung der Strahlungsquellen 104 durchlässig, die dadurch zum Kunststoffrohr 100 vordringen und in dieses eindringen können. Da durch wird der Härtevorgang der verschiedenen Kunststoffschichten des Kunststoffrohres eingeleitet.

Das Führungsrohr 109 hat eine lichte Weite die zumindest annähernd gleich der Summe aus dem Solldurchmesser des fertigen Kunststoffrohres 100 und der zweimaligen Wanddicke des Trennschlauches ist, der aus der Trennfolie 98 gebildet wurde. Das Führugsrohr 109 ist an seiner Unterseite in der Längsrichtung geschlitzt, damit die beim Härtevorgang aus dem Kunststoffrohr 100 austretenden Reagenzien durch den Schlitz austreten und in die Auffangwanne 106 abtropfen können und sie nicht in den Spalt zwischen dem äußeren Trennschlauch und dem Führungsrohr 109 hineingedrückt werden.

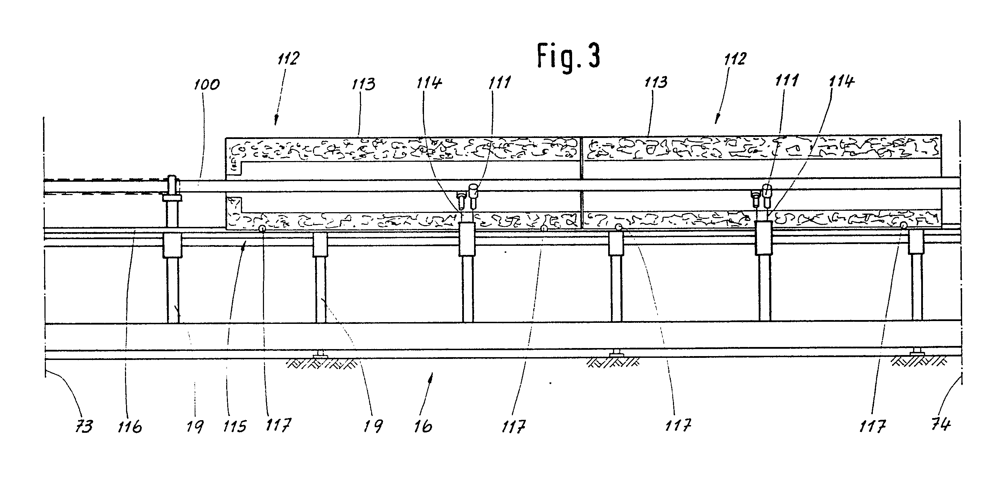

Das Führungsrohr 109 erstreckt sich über den Teil der Härtevorrichtung hinaus, der die Strahungsquellen 104 aufweist und der durch die Verkleidung 105 abgegrenzt wird. Das Führungsrohr 109 erstreckt sich mindestens bis zu derjenigen Stelle der Bewegungsbahn des Kunststoffrohres 100, ab der die Außenhaut des Kunststoffrohres 100 eine so große Formfestigkeit hat, daß das Kunststoffrohr 100 auf Tragrollen 111 abgestützt werden kann, die das Kunststoffrohr weiterleiten (Fig. 3).

Der Dorn 22, auf dem das Rohr von der ersten Arbeitsstation an geführt wurde, endet im Längenbereich der Härtevorrichtung 103. Von dort an wird das Rohr frei weiterbewegt und dabei durch die Tragrollen 111 abgestützt. Diese Tragrollen 111 sind auf die Höhenlage des Kunststoffrohres 100 einstellbar, damit durch sie auch Rohre unterschiedlichen Durchmessers aufgenommen und weiterbefördert werden können.

An die Härtevorrichtung 103 schließt eine Aushärtestrecke 112 an, die Wärmedämmvorrichtungen in Form von Wärmedämmhauben 113 aufweist. Diese Wärmedämmhauben 113 haben einen U-förmigen oder C-förmigen Aufriß, der so ausgerichtet ist, daß der Längsspalt an der Unterseite der Wärmedämmhauben 113 gelegen ist. Er ist ausreichend breit, damit die Ständer der Tragrollen 111 sich hindurcherstrecken können. Die Wärmedämmhauben sind mittels einer Längsführung 115 in der Längsrichtung des Rohres 100 längsverschiebbar geführt. Die Längsführung 115 wird durch Führungsschienen 116 und durch Laufrollen 117 gebildet. Die Führungsschienen "16 sind an den Pfosten 19 des Grundgestells 16 befestigt. Die Laufrollen 117 sind an den Wärmedämmhauben 113 drehbar gelagert.

Die Führungsschienen 116 haben eine Länge, die um mindestens die Länge einer der Abdeckhauben 113 länger als die Summe der Länge der einzelnen Abdeckhauben 113 ist. Dadurch können die Abdeckhauben 113 einzeln jeweils so weit auf den Führungsschienen 116 verschoben werden, daß jede Stelle des Führungsrohres 109 zugänglich ist.

Die Wärmedämmhauben 113 sind in Fig. 2 in einer zurückgezogenen Stellung dargestellt. Beim Betrieb des Maschinenteils 11 zum Herstellen des Kunststoffrohres 100 sind die Abdeckhauben 113 bis an die Härtevorrichtung 103 herangefahren, so daß sie bereits den aus der Härtevorrichtung 103 herausragenden Längenabschnitt des Führungsrohres 109 umgeben und den darin befindlichen Teil des Kunststoffrohres 100 vor einem Verlust der Wärme bewahren, die für das Aushärten des Kunststoffrohres nötig ist.

Am Ende der Führungsschienen 116 der Längsführung 115 ist eine Zugvorrichtung 118 angeordnet. Sie weist mindestens zwei Kettenförderer 119 auf, die diametral zum Kunststoffrohr 100 angeordnet sind. Zur Schonung des Kunststoffrohres 100 werden zweckmäßigerweise insgesamt wenigstens vier Kettenförderer 119 eingesetzt.

Die Kettenförderer 119 weisen je eine Rollenkette 121 auf, die beim ziehenden Drum, das am Kunststoffrohr 100 anliegt, durch eine Führungsschiene 122 geführt wird. Die Rollenketten sind mit Winkellaschen ausgerüstet, an denen Mitnehmerstollen 123 befestigt sind, die aus einem Elastomer hergestellt sind.

Die Zugvorrichtung 118 wird über ein stufenlos einstellbares Getriebe 124 von dem Elektromotor 67 angetrieben, mit dem auch die durchgehende Anbtriebswelle 66 für die angetriebenen Vorrichtungen gekoppelt ist.

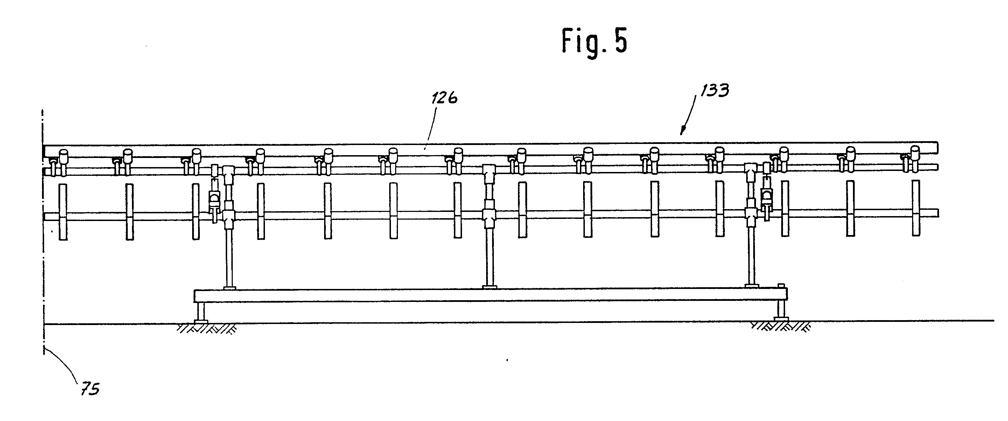

Im Anschluß an die Zugvorrichtung 118 ist eine Trennvorrichtung 125 vorhanden, mittels der das Kunststoffrohr 100 in einzelne Längenabschnitte 126 (Fig. 5) mit einem bestimmten Längenmaß aufgeteilt wird. Die Trennvorrichtung 125 ist mittels einer Längsführung 127 in der Längsrichtung des Kunststoffrohres 100 verfahrbar ausgebildet. Die Trennvorrichtung 125 ist mit einer Klemmvorrichtung 128 ausgerüstet. Diese weist zwei Klemmbakkenpaare 129 auf von denen in der Zugrichtung des Kunststoffrohres 100 eines vor und eines hinter dem Trennwerkzeug 132 der Trennvorrichtung 125 angeordnet ist. Jeder Klemmbacken dieser beiden Klemmbackenpaare ist mit je einem doppelt wirkenden pneumatischen Kolbenantrieb 131 verbunden, durch den er am Kunststoffrohr 100 mit einer gewissen Klemmkraft angelegt werden kann, wie es in Fig. 4 rechts strichpunktiert dargestellt ist, oder vom Kunststoffrohr 100 zurückgezogen werden kann, wie es in Fig. 4 links dargestellt ist.

Die Trennvorrichtung 125 ist mit einer nicht dargestellten Rückholvorrichtung gekoppelt, die einen pneumatischen Kolbenantrieb aufweist. Dieser wird durch eine Steuervorrichtung betätigt, die auch für das Betätigen der Klemmvorrichtungen 129 sorgt. Zweckmäßigerweise ist in der in Fig. 4 ausgezogen dargestellten Ausgangsstellung der Trennvorrichtung 125 ein fester Anschlag vorhanden, gegen den die Trennvorrichtung 125 durch die Rückholvorrichtung gedrückt wird.

In einer bestimmten Entfernung von der Trennvorrichtung 125 ist eine Rohrablegevorrichtung 133 angeordnet (Fig. 5), die den vom endlos gefertigten Kunststoffrohr 100 abgeteilten Längenabschnitt 126 (Fig. 5) aus der Fluchtlinie des Kunststoffrohres 100 heraushebt und zu einem daneben gelegenen Rohrlagerplatz befördert.

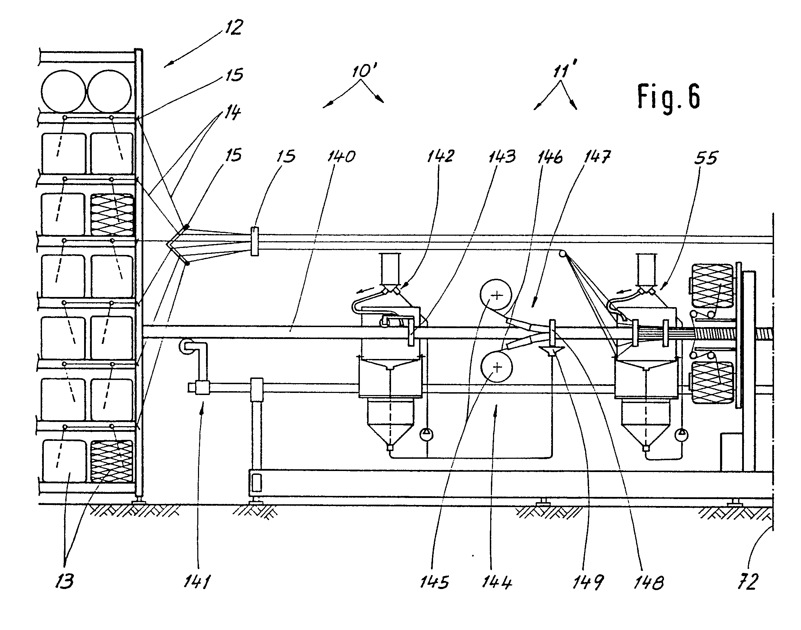

Aus Fig. 6 ist der erste Abschnitt der Einrichtung 10′ zu ersehen, innerhalb dessen ein Teil der Vorrichtungen gegenüber derjenigen Ausführungsform abgewandelt ist, die bei der Einrichtung 10 vorhanden ist und in Fig. 1 dargestellt ist.

Die Einrichtung 10′ ist darauf eingerichtet, ein faserverstärktes Kunststoffrohr, ähnlich dem Kunststoffrohr 100, auf der Grundlage eines Kunststoff-Innenrohres herzustellen, das im allgemeinen aus einem thermoplastischen Kunststoff besteht. Dieses Kunststoff-Innenrohr 140 wird mittels einer Zuführvorrichtung 141 in der Fluchtlinie der nachfolgenden Arbeitsstationen und Vorrichtungen stetig zugeführt. Am Maschinenteil 11′ der Einrichtung 10′ ist in einer ersten Arbeitsstation eine Zuführvorrichtung 142 für ein Klebeharz angeordnet, die weitgehend gleich der Zuführvorrichtung 33 ist, die an etwa der gleichen Stelle des Maschinenteils 11 angeordnet ist. Das von der Zuführvorrichtung 142 auf das Kunststoff-Innenrohr 140 aufgegossene Klebeharz wird mittels einer Ringrakel 143 zu einer ringförmigen gleichmäßig dicken Klebeharzschicht geformt. Diese Ringrakel 143 ist ebenso wie die Ringrakel 41 mit einer Führungsvorrichtung verbunden, wie sie anhand Fig. 7 näher erläutert wird.

Neben der Zuführvorrichtung 142 ist eine Abspulvorrichtung 144 vorhanden, die zwei Spulen 145 mit einem darauf aufgewickelten bandförmigen Vlies in Form eines Wirrfaservlieses aufweist. Daneben ist eine Leit- und Formvorrichtung 147 angeordnet, mittels der die von der Abspulvorrichtung 144 abgezogenen beiden Vliesbänder 146 zum Kunststoff-Innenrohr 140 hingeleitet werden und dabei zu den beiden halbzylindrisch geformten Hälften eines in Längsrichtung zweifach offenen Schlauches geformt werden.

Im Anschluß an die Leit- und Formvorrichtung 147 ist eine Ringrakel 148 angeordnet, mittels der der zweiteilige Vlies-Schlauch in die von der Zuführvorrichtung 142 und der Ringrakel 143 gebildete Klebeharzschicht eingebettet wird, womit eine Haft- und Pufferschicht auf der Außenseite des Kunststoff-Innenrohres 140 gebildet wird. Das dabei abgestreifte überschüssige Klebeharz wird von einer Auffangwanne 149 aufgefangen und von dort zum Vorratsbehälter der Zuführvorrichtung 142 zurückgeleitet.

Auf die Haft- und Pufferschicht werden nacheinander je dreimal eine axiale Verstärkungsschicht und abwechselnd dazu eine tangentiale Verstärkungsschicht aufgebracht, und zwar mit Vorrichtungen, wie sie bei der Einrichtung 10 für die Herstellung des Kunststoffrohres 100 näher beschrieben wurden. Der einzige Unterschied zu jener Einrichtung ist der, daß auf der Einlaufseite der Zuführvorrichtung 55 für die erste Kunstharzschicht die Abspulvorrichtung 48 und die Leit- und Formvorrichtung 52 für die schlauchförmige Vlieseinlage der Stützschicht nicht vorhanden ist. Bei der Einrichtung 10′ wird von der Zuführvorrichtung 55 lediglich eine für die erste axiale Verstärkungsschicht und die erste tangentiale Verstärkungsschicht ausreichende Kunstharzmenge auf die Haft- und Pufferschicht auf dem Kunststoff-Innenrohr 140 aufgetragen.

Aus Fig. 7 ist die Ringrakel 41 und die mit ihr verbundene Führungsvorrichtung 42 im einzelnen zu ersehen.

Die Führungsvorrichtung 42 weist zwei Führungsarme 151 auf, die über ein Joch 152 untereinander verbunden ind. Am Joch 152 ist die Ringrakel 41 austauschbar befestigt. Die beiden Führungsarme 151 sind mittels je eines Kugelgelenkes 153 allseits schwenkbar gelagert und dabei in der durch den Pfeil 154 angedeuteten Zugrichtung des späteren Kunststoffrohres 100 unverschiebbar festgehalten. Die beiden Führungsarme 151 erstrecken sich über die Kugelgelenke 153 hinaus nach der anderen Seite hin, wo je ein Ausgleichsgewicht 155 an ihnen festgeklemmt ist. Die beiden Ausgleichsgewichte 155 sind so ausgelegt, daß sie das Gewichtsmoment der Führungsarme 151 auf der anderen Seite einschließlich des Joches 152 und der Ringrakel 41 sowie zweier Führungsrollen 156 und deren Haltearme 157 bis auf eine bestimmte Restgewichtskraft auszugleichen vermögen. Mit dieser Restgewichtskraft liegen die Führungsrollen auf dem Dorn 22 auf, wobei der nicht dargestellte innere Trennschlauch für das spätere Kunststoffrohr 100 sich noch dazwischen befindet.

Um eine gute Führung der Ringrakel 41 sowohl in vertikaler Richtung wie auch in horizontaler Richtung zu erreichen, sind die an den Haltearmen 157 drehbar gelagerten Führungsrollen 156 so ausgerichtet, daß ihre Laufebene zumindest annähernd durch die Längsachse des Dorns 22 hindurchgeht und die beiden Laufbenen einen Winkel zwischen 60° und 120° einschließen, wobei der optimale Winkelwert 90° beträgt.

Damit die Laufebene der Führungsrollen 156 auch bei einer Änderung des Durchmessers des Dorns 22 oder des Kunststoff-Innenrohres 140 auf die Längsachse des Dorns 22 bzw. des Kunststoff-Innenrohres 140 ausgerichtet werden kann, ist es zweckmäßig, die Haltearme 157 um ihre Längsachse drehbar mit dem Joch 152 zu verbinden.

Im folgenden wird anhand Fig. 8 die Leit- und Formvorrichtung 52 für die Vliesbänder 51 sowie die Leit- und Formvorrichtung 56 für die Faserstränge 14 näher erläutert.

Die Leit- und Formvorrichtung 52 weist für jedes der Vliesbänder 51 je eine Leitschaufel 161 auf, deren dem Dorn 22 zugekehrte Innenfläche 162 zumindest in ihrem Endbereich konkav gekrümmt ist, so daß das zunächst ebene Vliesband 51 näherungsweise zur Mantelfläche eines halben Kreiszylinders verformt wird und so als Vliesschlauchhälfte 163 dem Dorn 22 zugeleitet werden kann, aus denen nach ihrer Vereinigung der Vliesschlauch 53 gebildet wird, der an der Oberseite und der Unterseite des Dorns 22 in der Längsrichtung offen ist.

Die Leit- und Formvorrichtung 56 für die Faserstränge 14 weist einen Leitkranz 164 und einen Leitring 165 auf. Im Leitkranz 164 ist eine der Anzahl der Faserstränge 14 entsprechende Anzahl Durchgangslöcher 166 vorhanden, durch die je einer der Faserstränge 14 hindurchgezogen ist. Die Durchgangslöcher 166 sind entweder entlang einem einzigen Kreisring oder entlang mehrerer Kreisringe verteilt angeordnet, die mittig zueinander liegen. Die Anzahl dieser Kreisringe hängt von der Anzahl und der Dicke der Faserstränge 14 ab. Der Leitring 165 weist eine ringförmig geschlossene Innenfläche 167 auf, die, wie in Fig. 8 dargestellt ist, beispielsweise durch die Innenfläche eines im Leitring 165 eingelegten Drahtringes 168 verkörpert werden kann. Dieser Drahtring 168 ist aus einem Federstahl hergestellt und nach Art eines Springringes für Bohrungen über seine Nennweite hinaus aufgespreizt und in elastisch zusammengedrücktem Zustand in eine Nut auf der Innenseite des Führungsringes 165 eingelegt. Auf diese Weise kann der Drahtring 168 beim Verschleiß leicht ausgewechselt werden.

Die nominelle Innenfläche 167 des Leitringes 165 hat eine kleinere lichte Weite als der kleinste Kreisring des Anordnungsmusters der Durchgangslöcher 166 im Leitkranz 164.

Auf diese Weise werden die Faserstränge 14 vom Leitkranz 164 aus in der Form eines kegelstumpfförmigen Faserstrangmantels 169 dem Leitring 165 zugeführt. In dem engeren Leitring 165 liegen die Faserstränge 14 so dicht beieinander, daß ihre Fasern bereits im Leitring 165 einen geschlossenen kegelstumpfförmigen Fasermantel 170 bilden, der vom Leitring 165 aus zu der Ringrakel 61 hingeleitet wird, wobei die Fasern des Fasermantels 170 in Umfangsrichtung immer dichter zusammengeführt werden und sich dabei der auf der Außenseite der Stützschicht vorhandenen Überschußmenge des Kunstharzes einander so weit nähern, daß sie auf der Strecke zwischen dem Leitring 165 und der Ringrakel 61 bereits in diese Kunstharzchicht eintauchen und anschließend von der Ringrakel 61 vollends darin eingebettet werden und von da ab die erste axiale Verstärkungsschicht des späteren Kunststoffrohres 100 bilden.

Wie aus Fig. 8 ersehen ist, erfolgt das Zusammenführen der beiden Vliesschlauchhälften 163 zum Vliesschlauch 53 etwa im Bereich des Leitkranzes 164 der Leit- und Formvorrichtung 56. Das Aufgießen des Kunstharzes sowohl für die Stützschicht, wie auch für die nachfolgenden beiden Verstärkungsschichten erfolgt über das Zuführrohr 38 der Zuführvorrichtung 33 zwischen die ein an der sich nähernden Ränder der Vliesschlauchhälften 163, wobei die Mündung 39 des Zuführrohres 33 so weit wie möglich in den sich schließenden Spalt hinein verlegt ist.

Die Faserstränge 14, die in den verschiedenen Leit- und Formvorrichtungen zu einem kegelstumpfförmigen Fasermantel geformt werden und anschließend zum Bilden einer axialen Verstärkungsschicht in die betreffende Kunstharzchicht eingebettet werden, werden zweckmäßigerweise vor ihrem Einlauf in den Leitkranz der Leit- und Formvorrichtung durch je eine in den Zeichnungen nicht dargestellte Spannvorrichtung einzeln über die durch die Reibung an den Leitvorrichtungen 15 schon vorhandene Grundspannung hinaus zusätzlich gespannt. Dabei ist auf eine gleichmäßige Gesamtspannung der Faserstränge untereinander zu achten. Auch die von den Spulenträgern abgezogenen Faserstränge, die auf die darunter liegende axiale Verstärkungsschicht aufgewickelt werden und zum Bilden einer tangentialen Verstärkungsschicht in die vorhandene Kunstharzchicht eingebettet werden, werden ebenfalls zusätzlich vorgespannt. Dafür werden die Spulen am Spulenträger durch je eine Bremsvorrichtung gebremst, deren Bremskraft von einer Steuervorrichtung in Abhängigkeit vom jeweiligen Außendurchmesser der Spule gesteuert wird, der zu diesem Zweck von einem Taster in der Steuervorrichtung abgetastet wird.

Bisher wurde der Einfachheit halber unterstellt, daß der Dorn 22 ein langgestreckter und durchgehend zylindrischer Hohlkörper von gleichbleibendem Außendurchmesser ist. In der Wirklichkeit weist der Dorn 22 mehrere Längenabschnitte auf, die zwar alle zylindrisch sind, deren Außendurchmesser aber von der Haltevorrichtung 21 an bis zu seinem Ende im Bereich der Härtevorrichtung 103 stufenweise verringert ist. Aus praktischen Gründen wird der Dorn aus mehreren selbständigen Einzelstücken zusammengesetzt, die an ihren Enden durch je eine Gewindeverbindung miteinander verbunden werden. Zweckmäßigerweise ist die Länge der selbständigen Einzelstücke so gewählt, daß die Verbindungsstelle der Einzelstücke mit den Übergangsstellen von einer Durchmesserstufe zur nächsten zusammenfallen. Dadurch können die Einzelstücke des Dorns 22 auf ihrer gesamten Länge jeweils mit gleichbleibendem Außendurchmesser gefertigt werden. Nach dem Verbinden dieser Einzelstücke in der richtigen Reihenfolge ergibt sich dann von selbst die Abstufung des Außendurchmessers des gesamten Dorns 22.

Am Dorn 22 werden die Übergangsstellen von einer Durchmesserstufe zur nächsten dorthin gelegt, wo bei dem in sich noch nachgiebigen, weil noch nicht ausgehärteten, Kunststoffrohr 100 die Neigung besteht, etwa aufgrund äußerer Einwirkungen den Durchmesser zu verringern. Das sind vor allem diejenigen Stellen, an denen die Faserstränge für eine tangentiale Verstärkungsschicht auf dem bis dahin jeweils vorhandenen Rohling des Kunststoffrohres 100 aufgewickelt werden. Dieses Aufwickeln der Faserstränge bewirkt jedesmal ein Umschlingen der vorangehenden axialen Verstärkungsschicht, wodurch deren Faserstränge in die Kunststoffschicht eingebettet werden und wodurch sowohl diese Schicht, wie auch die tangentiale Verstärkungsschicht selbst verdichtet wird. Dieses Verdichten der Rohrwand bewirkt dort jedesmal auch eine gerinfügige Verengung des Rohlings. Daher ist es zweckmäßig, die Übergangsstelle von einer Durchmesserstufe zur nächsten in der Bewegungsrichtung des Kunststoffrohres 100 unmittelbar neben der Aufwickelstelle des Faserstranges für eine tangentiale Verstärkungsschicht anzuordnen, wo sich die Verengung der Rohrwand am stärksten bemerkbar macht. Diese bleibt von da ab im allgemeinen bis zur nächsten Aufwickelstelle eines Faserstranges für die nächste tangentiale Verstärkungsschicht ohne Veränderung erhalten.

Eine Verengung des Kunststoffrohres 100 tritt aus anderen Gründen im Bereich der Härtevorrichtung 103 ein. Dort bewirkt der intensiv eingeleitete Aushärtevorgang des in der Rohrwand enthaltenen Kunststoffes ein Schrumpfen des Kunststoffrohres 100. Es ist daher zweckmäßig, eine weitere Übergangsstelle von einer Durchmesserstufe zur nächsten im Bereich der Härtevorrichtung 103 anzuordnen.

Je nach der Art der verwendeten Kunstharze und deren Volumenverhalten beim Aushärten in der Härtestation 103 kann es über die Verringerung des Außendurchmessers des Dorns 22 hinaus zweckmäßig sein, in diesem Längenabschnitt den Dorn nicht mehr genau zylindrisch sondern sogar schwach konisch mit in der Bewegungsrichtung des Kunststoffrohres 100 abnehmendem Außendurchmesser auszubilden.

Das verhältnismäßig enge Anliegen des auf dem Dorn 22 sich allmählich aufbauenden Kunststoffrohres 100 kann auch dazu herangezogen werden, eine Art pneumatische Schmierung anzuwenden. Zu diesem Zweck wird über eine in Fig. 1 der Übersichtlichkeit halber nicht dargestellte Zuleitung ein Druckgas in den Innenraum des Dorns 22 hineingeleitet. Im einfachsten Falle wird Druckluft als pneumatisches Schmiermittel verwendet.

Um das willkürliche Austreten des Druckgases aus der axialen Öffnung des Dorns 22 zu vermeiden, ist an einer Stelle seines Anfangsbereiches, an der keine sonstigen von außen her austauschbaren Vorrichtungen eingeführt werden müssen, eine Schottwand angebracht, durch die das Zurückstemmen des Druckgases verhindert wird. Eine solche Schottwand wird am einfachsten an einer Verbindungsstelle zweier Einzelstücke des Dorns 22 angeordnet. Dort ist dann auch der Anschluß der Druckgasleitung am einfachsten. Für den Aufbau einer pneumatischen Schmierung sind an mehreren Stellen der Längserstreckung des Dorns 22 radiale Durchgangslöcher angebracht, die von der Innenseite des Dorns bis zu seiner Außenseite durchgehen. Dabei ist es zweckmäßig, diese Durchgangslöcher an den Übergangsstellen von einer Durchmesserstufe zur nächsten anzuordnen, weil sich der pneumatische Schmierfilm am Anfang eines Längenabschnittes mit verringertem Außendurchmesser am einfachsten aufbauen kann und er von dort aus einerseits unter der Wirkung des Überdruckes des nachströmenden pneumatischen Schmiermittels und andererseits durch die Wanderbewegung des Kunststoffrohres 100 auf dem Dorn 22 leichter in axialer Richtung ausbreiten kann.

Im einfachsten Falle werden die Durchgangslöcher durch radiale Ausnehmungen an der Stirnfläche der Einzelstücke des Dorns 22 gebildet. Dadurch kann im allgemeinen das Anbringen gesonderter Bohrungen in den Einzelstücken entfallen.

Da die Schrumpfung des Kunststoffrohres 100 im Bereich der Härtevorrichtung 103 je nach der Art der verwendeten Kunststoffe und auch je nach der Art und Intensität der Wärmezuführung oder Zuführung von Strahlung zur Einleitung und Weiterführung des Aushärtevorganges, unterschiedlich sein kann ist es zweckmäßig, in diesem Längenabschnitt des Dorns 22 den Innenraum durch eine zusätzliche Schottwand von dem Innenraum der vorangehenden Längenabschnitte abzuschließen und über diese Schottwand den anschließenden Innenraum an eine gesonderte Druckluftleitung anzuschließen, die durch den hohlen Dorn 22 hindurchverlegt ist und die an eine Druckgasquelle angeschlossen wird, deren Überdruck größer als der Überdruck in den vorangehenden Längenabschnitten des Dorns 22 ist oder sein kann. Dadurch ist es bei Bedarf möglich, in diesem Längenabschnitt des Dorns 22 durch Erhöhung des Gasdruckes die Schmierwirkung des pneumatischen Schmiermittels zu erhöhen.

Damit das als pneumatisches Schmiermittel verwendete Druckgas nicht willkürlich am Ende des Dorns 22 entweicht und dadurch der gewünschte Druckaufbau gar nicht möglich wäre, ist der Dorn 22 im Bereich seines Endes durch eine Schottwand abgeschlossen.

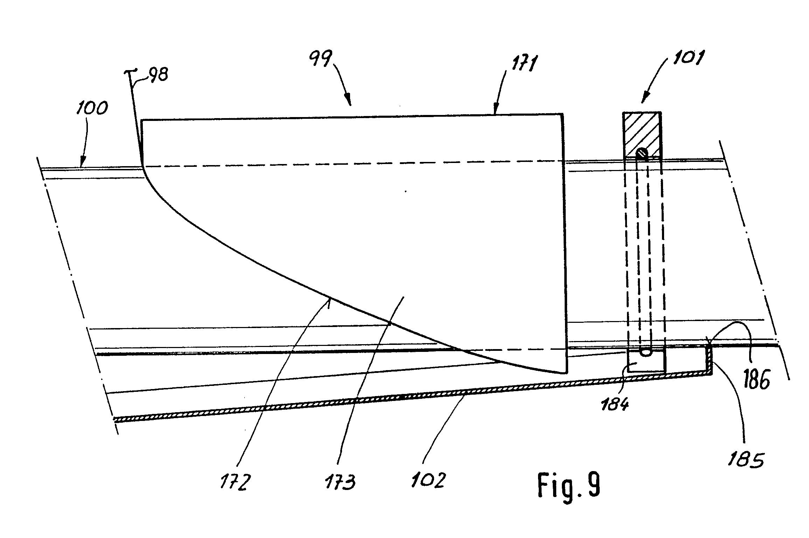

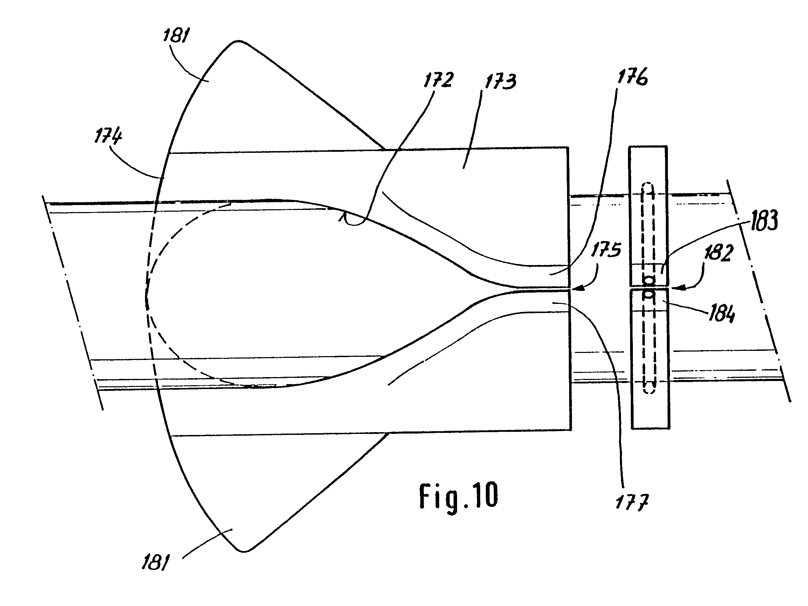

Im folgenden werden anhand Fig. 9 bis Fig. 11 die Leit- und Formvorrichtung 99 und die benachbarte Ringrakel 101 näher erläutert.

Die Leit- und Formvorrichtung 99 für die Trennfolie 98 arbeitet etwas anders als etwa die Formvorrichtung 27 für die innere Trennfolie 25. Ebenso arbeitet auch die Ringrakel 101 etwas anders als die davor eingesetzten Ringrakeln 61 ,78, 87 und 95. Das liegt daran, daß bei den letztgenannten Ringrakeln das dort etwa noch vorhandene überschüssige Kunstharz von der Außenseite des Rohrrohlings unmittelbar abgestreift wird. Bei der Leit- und Formvorrichtung 99 wird die Trennfolie 98 um die letzte oder äußerste Kunstharzschicht des Kunststoffrohres 100 herumgeschlagen und das Kunststoffrohr 100 dadurch umhüllt. Die sattelförmige Leit- und Formvorrichtung 99 weist einen Grundkörper 171 auf, der von einem dickwandigen Kreisringzylinder abgeleitet ist, der entlang einer schräg und zugleich etwas geschwungen verlaufenden Schnittlinie abgeschnitten ist. Die Ränder 172 der Seitenwangen 173 des Grundkörpers 171 verlaufen von einer oberhalb des Kunststoffrohres 100 gelegenen Einlaufschulter 174 für die Trennfolie 98 aus in der Längsrichtung des Kunststoffrohres 100 um dieses herum, stetig auf einander zu. Sie nähern sich in der lotrechten Meridianebene einander bis auf einen sehr kleinen Restspalt 175. Dessen Spaltweite liegt in der Größenordnung von einigen wenigen Zehntelmillimeter. Sie richtet sich zum Teil nach den hydraulischen Eigenschaften des abzustreifenden Kunstharzes wie Zähigkeit. Oberflächenspannung und dergleichen.

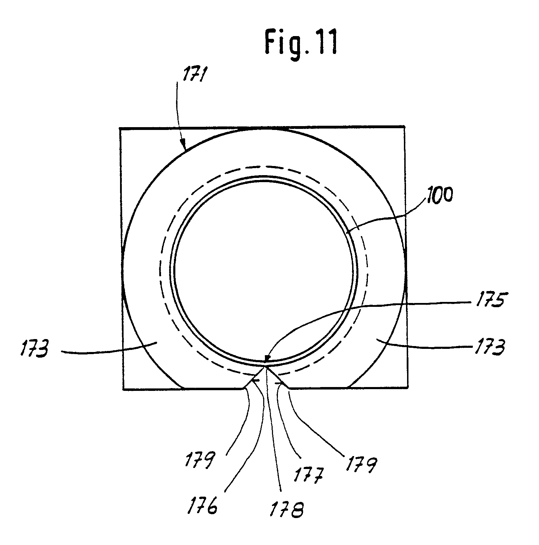

Wie aus Fig. 11 ersichtlich ist, verlaufen im Bereich des Restspaltes 175 die Seitenflächen 176 und 177 von ihrer Innenkante 178 zur Außenkante 179 hin unter einem gewissen Winkel auseinander, der im allgemeinen insgesamt 90° beträgt.

Die äußeren Abschnitte 181 der Einlaufschulter 174 können entweder einstückig mit dem Grundkörper 171 hergestellt sein. Sie können aber auch als getrennte Teile hergestellt werden und beispielsweise durch Verschrauben mit dem Grundkörper 171 nachträglich verbunden werden.

Die in der Nachbarschaft der Leit- und Formvorrichtung 99 angeordnete Ringrakel 101 ist ebenso wie die Formvorrichtung 99 nicht zu einem vollständigen Ring geschlossen. Sie weist vielmehr in der lotrechten Meridianebene unten einen Restspalt 182 auf, der ähnlich dem Restspalt 175 der Formvorrichtung 99 ausgebildet ist und in dessen Fluchtlinie gelegen ist. Ebenso wie bei der Formvorrichtung 99 verlaufen bei der Ringrakel 101 die Seitenflächen 183 und 184 des Restspaltes 182 von der Innenkante zur Außenkante hin unter einem Winkel auseinander, der im allgemeinen gleich ist dem Winkel der Seitenflächen 176 und 177 beiderseits des Restspaltes 175. Fig. 11 stellt in soweit auch eine axiale Ansicht der Ringrakel 101 dar.

Die in Fig. 2 nur unterhalb der Ringrakel 101 dargestellte Auffangwanne 102 erstreckt sich in Wirklichkeit auch unter der Formvorrichtung 99 entlang. Diese Auffangwanne 102 erstreckt sich in der Querrichtung nur wenig über die Außenkanten 179 hinaus und kann daher aufgrund ihrer verhältnismäßig geringen Breite auch als Auffangrinne bezeichnet werden.

An dem in der Bewegungsrichtung des Kunststoffrohres 100 jenseits der Ringrakel 101 gelegenen Ende der Auffangwanne 102 ist ein Abstreifer 185 angeordnet, dessen Abstreifkante 186 auf die Außenkontur des Kunststoffrohres 101 abgestimmt ist.

Der Abstreifer 185 streift vom Kunststoffrohr 100 diejenigen Kunstharzreste ab, die nach dem Verlassen der Ringrakel 101 im Bereich deren Restspaltes 182 an der Unterseite des Kunststoffrohres haftengeblieben sein sollten.

## Ansprüche

1. Verfahren zum kontinuierlichen Herstellen von faserverstärkten Kunststoffrohren, **gekennzeichnet** durch die Verfahrensschritte:
- auf einen waagerecht ausgerichteten Dorn, der in seinem Anfangsbereich von einer Haltevorrichtung festgehalten wird und von dort aus fliegend angeordnet ist, wird eine bandförmige Trennfolie in der Längsrichtung des Dorns stetig auf diesen aufgezogen und dabei zu einem den Dorn umhüllenden Trennschlauch geformt, wobei die Ränder der Trennfolie undurchlässig miteinander verbunden werden,
- der Trennschlauch wird in der Zugrichtung des Kunststoffrohres durch alle folgenden Bearbeitungsstationen hindurch stetig weiterbewegt,
- auf den Trennschlauch wird ein flüssiges Kunstharz aufgegossen und mittels einer ringförmigen Rakel (Ringrakel) zu einer ringförmigen gleichmäßig dicken Kunstharzschicht geformt,
- diese Kunstharzschicht wird zum Bilden einer Innenhaut des Kunststoffrohres durch Wärmeeinwirkung zum Gelieren gebracht,
- auf die Innenhaut wird ein flüssiges Kunstharz aufgegossen und in die sich bildende Kunstharzschicht ein bandförmiges Vlies lückenlos eingebettet und so eine Stützschicht gebildet,
- auf die Stützschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstumpfförmigen Fasermantels einer den Dorn umgebenden Ringrakel zugeleitet und von dieser zum Bilden einer axialen Verstärkungsschicht in die Kunstharzschicht eingebettet,

- auf die axiale Verstärkungsschicht wird ein flüssiges Kunstharz aufgegossen, aus dem sich eine Kunstharzschicht bildet,

- von einem um den Dorn in einer bestimmten Drehrichtung umlaufenden kranzförmigen Spulenträger, der wenigstens eine Spule mit einer Anzahl Fasern in Form eines Faserstranges aufweist, wird von der Spule oder von den Spulen der Faserstrang abgezogen, auf die erste Verstärkungsschicht tangential mit kleinstmöglichem Steigungswinkel aufgewickelt und dabei zum Bilden einer tangentialen Verstärkungsschicht in die Kunstharzschicht eingebettet, wobei zugleich die Fasern der darunterliegenden axialen Verstärkungsschicht zum Dorn hin verdichtet werden,

- auf die tangentiale Verstärkungsschicht wird ein flüssiges Kunstharz aufgegossen, aus dem sich eine Kunstharzschicht bildet,

- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstumpfförmigen Fasermantels einer den Dorn umgebenden Ringrakel zugeleitet und von dieser zum Bilden einer weiteren axialen Verstärkungsschicht in die Kunstharzschicht eingebettet.

- auf die axiale Verstärkungsschicht wird ein flüssiges Kunstharz aufgegossen, aus dem sich eine Kunstharzschicht bildet,

- von einem um den Dorn in der entgegengesetzten Drehrichtung zum vorhergehenden Spulenträger umlaufenden kranzförmigen weiteren Spulenträger, der wenigstens eine Spule mit einer Anzahl Fasern in Form eines Faserstranges aufweist, wird von der Spule oder von den Spulen der Faserstrang abgezogen, auf die axiale Verstärkungsschicht tangential mit kleinstmöglichem Steigungswinkel aufgewickelt und dabei zum Bilden einer weiteren tangentialen Verstärkungsschicht in die Kunstharzschicht eingebettet, wobei zugleich die Fasern der darunterliegenden axialen Verstärkungsschicht zum Dorn hin verdichtet werden,

- bei Bedarf wird auf dieser tangentialen Verstärkungsschicht je eine weitere axiale Verstärkungsschicht und eine weitere tangentiale Verstärkungsschicht gebildet, wobei die Drehrichtung des dabei eingesetzten Spulenträgers umgekehrt zu derjenigen des vorhergehenden Spulenträgers ist,

- nach der letzten tangentialen Verstärkungsschicht wird mittels einer Ringrakel ein vorhandener Harzüberschuß abgestreift,

- auf die äußerste Verstärkungsschicht wird ein flüssiges Kunstharz aufgegossen und mittels einer Ringrakel zu einer gleichmäßig dicken Außenhaut des Kunststoffrohres geformt,

- auf die Außenhaut wird mittels einer Leit- und Formvorrichtung eine bandförmige Trennfolie in der Längsrichtung des Dorns stetig aufgelegt und dabei zu einem die Außenhaut umhüllenden Trennschlauch geformt,

- das so gebildete Kunststoffrohr wird durch eine Härtevorrichtung hindurchgeführt, in der durch Wärmeeinwirkung und/oder durch Lichteinwirkung das Härten der Kunstharzschichten eingeleitet und zumindest zum Teil vollendet wird,

- innerhalb der Härtevorrichtung wird das Kunststoffrohr von dem dort endenden Dorn abgezogen,

- nach der Härtevorrichtung wird das fertige Kunststoffrohr mittels einer Trennvorrichtung in einzelne Längenabschnitte mit einem bestimmten Längenmaß aufgeteilt.

2. Verfahren nach Anspruch 1,
**gekennzeichnet** durch den Verfahrensschritt:
- das Vlies für die Stützschicht wird entweder in der Form eines Bandes von einer Spule, oder vorzugsweise in der Form von zwei oder mehr Bändern von der entsprechenden Anzahl Spulen abgezogen, die an einem um den Dorn umlaufenden kranzförmigen Spulenträger angeordnet ist bzw. sind, auf die Innenhaut lückenlos und ohne Überlappung aufgewickelt vnd dabei in die auf der Innenhaut gebildete zweite Kunstharzschicht eingebettet.

3. Verfahren Anspruch 1,
**gekennzeichnet** durch den Verfahrensschritt:
- das Vlies für die Stützschicht wird in der Form eines Bandes, dessen breite zumindest annähernd gleich dem Umfang der Stützschicht ist, von einer Spule abgezogen, die oberhalb des Dorns angeordnet ist, und mittels einer Leit- und Formvorrichtung an den Dorn allseits herangeführt und dabei in die zweite Kunstharzschicht eingebettet.

4. Verfahren nach Anspruch 1,
**gekennzeichnet** durch den Verfahrensschritt:
- das Vlies für die Stützschicht wird in der Form zweier Bänder, deren Gesamtbreite zumindest annähernd gleich dem Umfang der Stützschicht ist, von je einer Spule abgezogen, die beiderseits des Dorns diametral zu diesem angeordnet sind, und mittels einer Leit-und Formvorrichtung an den Dorn allseits herangeführt und dabei in die Kunstharzschicht eingebettet.

5. Verfahren nach Anspruch 1 in Verbindung mit einem der Ansprüche 2 bis 4,
**gekennzeichnet** durch die Verfahrensschritte:
- das für die Stützschicht auf die Innenhaut aufgegossene Kunstharz wird mit einem über die Mindestmenge für die Stützschicht hinausgehenden Überschuß aufgegossen, der ausreicht, um damit die Kunstharzschicht zumindest für die erste axiale Verstärkungsschicht, vorzugsweise zugleich auch für die erste tangentiale Verstärkungsschicht, zu bilden,

- das Vlies für die Stützschicht wird so in diese Kunstharzschicht eingebettet, daß die das Aufnahmevolumen des Vlieses übersteigende Überschußmenge des Kunstharzes durch das Vlies hindurch nach außen austritt,

- die über den ersten Führungskranz an den Dorn herangeführten Faserstränge für die axiale Verstärkungsschicht werden von der betreffenden Ringrakel aus zum Bilden der axialen Verstärkungsschicht in die von der Überschußmenge gebildete Kunstharzschicht eingebettet,

- in dem Falle, daß die Überschußmenge auch für die zweite Verstärkungsschicht ausreicht, werden die vom ersten Spulenträger abgezogenen Faserstränge für die tangentiale Verstärkungsschicht auf die axiale Verstärkungsschicht tangential aufgewickelt und dabei in die Überschußmenge eingebettet.

6. Verfahren zum kontinuierlichen Herstellen von faserverstärkten Kunststoffrohren mit einem Kunststoffinnenrohr, **gekennzeichnet** durch die Verfahrensschritte:

- das Kunststoffinnenrohr wird mittels einer Zuführvorrichtung in waagerechter Ausrichtung konzentrisch zu den nachfolgenden Bearbeitungsstationen zugeführt und in der Zugrichtung des Rohres stetig weiterbewegt,

- auf das Kunststoffinnenrohr wird für eine Haft- und Pufferschicht ein flüssiges Klebeharz aufgegossen und mittels einer ringförmigen Rakel (Ringrakal) zu einer ringförmigen gleichmäßig dikken Klebeharzschicht geformt,

- in diese Klebeharzschicht wird ein bandförmiges Vlies (Wirrfaservlies) zum Bilden der Haft- und Pufferschicht lückenlos eingebettet,

- auf die Haft- und Pufferschicht wird ein flüssiges Kunstharz aufgegossen, aus dem sich eine Kunstharzschicht bildet,

- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstupmfförmigen Fasermantels einer den Dorn umgebenden Ringrakel zugeleitet und von dieser zum Bilden einer axialen Verstärkungsschicht in die Kunstharzschicht eingebettet,

- auf die axiale Verstärkungsschicht wird ein flüssiges Kunstharz aufgegossen, aus dem sich eine Kunstharzschicht bildet,

- von einem um den Dorn in einer bestimmten Drehrichtung umlaufenden kranzförmigen Spulenträger, der wenigstens eine Spule mit einer Anzahl Fasern in Form eines Faserstranges aufweist, wird von der Spule oder von den Spulen der Faserstrang abgezogen, auf die erste Verstärkungsschicht tangential mit kleinstmöglichem Steigungswinkel aufgewickelt und dabei zum Bilden einer tangentialen Verstärkungsschicht in die Kunstharzschicht eingebettet, wobei zugleich die Fasern der darunterliegenden axialen Verstärkungsschicht zum Dorn hin verdichtet werden,

- auf die tangentiale Verstärkungsschicht wird ein flüssiges Kunstharz aufgegossen, aus dem sich eine Kunstharzschicht bildet,
von einem Regalgatter werden eine größere Anzahl Fasern in Form mehrerer Faserstränge abgezogen, einer mit radialem Abstand um den Dorn her um angeordneten Leitvorrichtung zugeleitet, von dieser aus in der Form eines geschlossenen kegelstumpfförmigen Fasermantels einer den Dorn umgebenden Ringrakel zugeleitet und von dieser zum Bilden einer weiteren axialen Verstärkungsschicht in die Kunstharzschicht eingebettet,

- auf die axiale Verstärkungsschicht wird ein flüssiges Kunstharz aufgegossen, aus dem sich eine Kunstharzschicht bildet,

- von einem um den Dorn in der entgegengesetzten Drehrichtung zum vorhergehenden Spulenträger umlaufenden kranzförmigen weiteren Spulenträger, der wenigstens eine Spule mit einer Anzahl Fasern in Form eines Faserstranges aufweist, wird von der Spule oder von den Spulen der Faserstrang abgezogen, auf die axiale Verstärkungsschicht tangential mit kleinstmöglichem Steigungswinkel aufgewickelt und dabei zum Bilden einer weiteren tangentialen Verstärkungsschicht in die Kunstharzschicht eingebettet, wobei zugleich die Fasern der darunterliegenden axialen Verstärkungsschicht zum Dorn hin verdichtet werden.

- bei Bedarf wird auf dieser tangentialen Verstärkungsschicht je eine weitere axiale Verstärkungsschicht und eine weitere tangentiale Verstärkungsschicht gebildet, wobei die Drehrichtung des dabei eingesetzten Spulenträgers umgekehrt zu derjenigen des vorhergehenden Spulenträgers ist.

- nach der letzten tangentialen Verstärkungsschicht wird mittels einer Ringrakel ein vorhandener Harzüberschuß abgestreift,

- auf die äußerste Verstärkungsschicht wird ein flüssiges Kunstharz aufgegossen und mittels einer Ringrakel zu einer gleichmäßig dicken Außenhaut des Kunststoffrohres geformt,

- auf die Außenhaut wird mittels einer Leit- und Formvorrichtung eine bandförmige Trennfolie in der Längsrichtung des Dorns stetig aufgelegt und dabei zu einem die Außenhaut umhüllenden Trennschlauch geformt,

- das so gebildete Kunststoffrohr wird durch eine Härtevorrichtung hindurchgeführt, in der durch Wärmeeinwirkung und/oder durch Lichteinwirkung das Härten der Kunstharzschichten eingeleitet und zumindest zum Teil vollendet wird,
- innerhalb der Härtevorrichtung wird das Kunststoffrohr von dem dort endenden Dorn abgezogen,
- nach der Härtevorrichtung wird das fertige Kunststoffrohr mittels einer Trennvorrichtung in einzelne Längenabschnitte mit einem bestimmten Längenmaß aufgeteilt.

7. Verfahren zum kontinuierlichen Herstellen von faserverstärkten Kunststoffrohren mit einem Kunststoffinnenrohr, das mit einer Haftschicht versehen ist, die durch ein Gewebe- oder Mattenband gebildet wird, das durch Wärmebehandlung der Außenseite des Kunststoffinnenrohres in diese eingebettet wurde,

**gekennzeichnet** durch die Verfahrensschritte:
- das Kunststoffinnenrohr wird mittels einer Zuführvorrichtung in waagerechter Ausrichtung konzentrisch zu den nachfolgenden Bearbeitungsstationen zugeführt und in der Zugrichtung des Rohres stetig weiterbewegt,
- auf die Haftschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstupmfförmigen Fasermantels einer den Dorn umgebenden Ringrakel zugeleitet und von dieser zum Bilden einer axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in einer bestimmten Drehrichtung umlaufenden kranzförmigen Spulenträger, der wenigstens eine Spule mit einer Anzahl Fasern in Form eines Faserstranges aufweist, wird von der Spule oder von den Spulen der Faserstrang abgezogen, auf die erste Verstärkungsschicht tangential mit kleinstmöglichem Steigungswinkel aufgewickelt und dabei zum Bilden einer tangentialen Verstärkungsschicht in die Kunstharzschicht eingebettet, wobei zugleich die Fasern der darunterliegenden axialen Verstärkungsschioht zum Dorn hin verdichtet werden,
- auf die tangentiale Verstärkungsschicht wird ein flüssiges Kunstharz aufgegossen, aus dem sich eine Kunstharzschicht bildet,
- von einem Regalgatter werden eine größere Anzahl Fasern in Form mehrerer Faserstränge abgezogen, einer mit radialem Abstand um den Dorn herum angeordneten Leitvorrichtung zugeleitet, von dieser aus in der Form eines geschlossenen kegelstupmfförmigen Fasermantels einer den Dorn umgebenden Ringrakel zugeleitet und von dieser zum Bilden einer weiteren axialen Verstärkungsschicht in die Kunstharzschicht eingebettet,
- auf die axiale Verstärkungsschicht wird ein flüssiges Kunstharz aufgegossen, aus dem sich eine Kunstharzschicht bildet,
- von einem um den Dorn in der entgegengesetzten Drehrichtung zum vorhergehenden Spulenträger umlaufenden kranzförmigen weiteren Spulenträger, der wenigstens eine Spule mit einer Anzahl Fasern in Form eines Faserstranges aufweist, wird von der Spule oder von den Spulen der Faserstrang abgezogen, auf die axiale Verstärkungsschicht tangential mit kleinstmöglichem Steigungswinkel aufgewickelt und dabei zum Bilden einer weiteren tangentialen Verstärkungsschicht in die Kunstharzschicht eingebettet, wobei zugleich die Fasern der darunterliegenden axialen Verstärkungsschicht zum Dorn hin verdichtet werden,
- bei Bedarf wird auf dieser tangentialen Verstärkungsschicht je eine weitere axiale Verstärkungsschicht und eine weitere tangentiale Verstärkungsschicht gebildet, wobei die Drehrichtung des dabei eingesetzten Spulenträgers umgekehrt zu derjenigen des vorhergehenden Spulenträgers ist,
- nach der letzten tangentialen Verstärkungsschicht wird mittels einer Ringrakel ein vorhandener Harzüberschuß abgestreift,
- auf die äußerste Verstärkungsschicht wird ein flüssiges Kunstharz aufgegossen und mittels einer Ringrakel zu einer gleichmäßig dicken Außenhaut des Kunststoffrohres geformt,
- auf die Außenhaut wird mittels einer Leit- und Formvorrichtung eine bandförmige Trennfolie in der Längsrichtung des Dorns stetig aufgelegt und dabei zu einem die Außenhaut umhüllenden Trennschlauch geformt,
- das so gebildete Kunststoffrohr wird durch eine Härtevorrichtung hindurchgeführt, in der durch Wärmeeinwirkung und oder durch Lichteinwirkung das Härten der Kunstharzschichten eingeleitet und zumindest zum Teil vollendet wird,
- innerhalb der Härtevorrichtung wird das Kunststoffrohr von dem dort endenden Dorn abgezogen,
- nach der Härtevorrichtung wird das fertige Kunststoffrohr mittels einer Trennvorrichtung in einzelne Längenabschnitte mit einem bestimmten Längenmaß aufgeteilt.

8. Verfahren nach einem der Ansprüche 1 bis 7, **gekennzeichnet** durch die Verfahrensschritte:
- für eine axiale Verstärkungsschicht, der keine Stützschicht unmittelbar vorangeht, wird das Kunstharz mit einem über die Mindestmenge für die axiale Verstärkungsschicht hinausgehenden Überschuß aufgegossen, der ausreicht, um damit auch die Kunstharzschicht für die unmittelbar folgende tangentiale Verstärkungsschicht zu bilden,
- die über den zweiten Führungskranz an den Dorn herangeführten Faserstränge für die axiale Verstär-

19

kungsschicht werden von der betreffenden Ringrakel aus so in die zuvor gebildete Kunstharzschicht eingebettet, daß die das Aufnahmevolumen der Faserstränge für die axiale Verstärkungsschicht übersteigende Überschußmenge durch die Fasern hindurch nach außen austritt,

- die vom zweiten Spulenträger abgezogenen Faserstränge für die tangentiale Verstärkungsschicht werden auf die axiale Verstärkungsschicht tangential aufgewickelt und dabei in die Überschußmenge eingebettet.

9. Einrichtung zum Durchführen des Verfahrens nach Anspruch 1
**gekennzeichnet** durch die Merkmale:

- es ist ein Regalgatter (12) vorhanden, das eine Anzahl Spulen (13) mit Fasersträngen (14) aus Glasfasern, Kohlefasern oder Textilfasern aufweist,

- am Regalgatter (12) sind Leitvorrichtungen (15) zum Abziehen der Faserstränge (14) von den Spulen (13) und zum Weiterleiten der Faserstränge (14) vorhanden,

- es ist ein Grundgestell (16) für die gemeinsame Aufnahme mehrerer Arbeitsstationen und Vorrichtungen vorhanden,

- im Anfangsbereich des Grundgestells (16) ist eine Haltevorrichtung (21) für einen Dorn (22) angeordnet, mittels der der Dorn (22) in seinem Anfangsbereich mit dem Grundgestell (16) ortsfest verbunden ist.

- der Dorn (22) ist als langgestreckter zylindrischer Hohlkörper ausgebildet,

- es ist eine Abspulvorrichtung (23) für eine bandförmige auf Spulen aufgewickelte Trennfolie (25) vorhanden,

- es ist eine Leitvorrichung (26) für die Trennfolie (25) vorhanden, mittels der die von der Abspulvorrichtung (23) abgezogene Trennfolie (25) in axialer Richtung dem Dorn (22) zuleitbar ist,

- im Anfangsbereich des Dorns (22) ist eine Formvorrichtung (27) angeordnet, mittels der die von der Leitvorrichtung (26) herangeleitete Trennfolie (25) um den Dorn (22) herum zu einem Trennschlauch formbar ist,

- es ist eine Verbindevorrichtung (28) vorhanden. mittels der die Ränder der zum Trennschlauch geformten Trennfolie (25) für Kunstharz undurchlässig miteinander verbindbar sind,

- es ist eine Zuführvorrichtung (33) für ein Kunstharz vorhanden, mittels der aus einem Vorratsbehälter (34) ein Kunstharz im Rückenbereich des Dorns (22) auf den Trennschlauch aufgießbar ist,

- es ist eine ringförmige Rakel (41) (Ringrakel) vorhanden, die den Dorn (22) außen umgibt und die eine bestimmte lichte Weite hat,

- unterhalb der Ringrakel (41) ist eine Auffangwanne (44.) für die abgestreifte Kunstharzmenge angeordnet,

- im Anschluß an die Ringrakel (41) ist eine Erwärmungsvorrichtung (43) vorhanden, die den Dorn (22) außen umgibt und mittels der die auf dem Trennschlauch vorhandene Kunstharzschicht zu einer Innenhaut des Kunststoffrohres gelierbar ist,

- es ist eine Zuführvorrichtung (55) für ein Kunstharz vorhanden, mittels der aus einem Vorratsbehälter ein Kunstharz im Rückenbereich des Dorns (22) auf die Innenhaut aufgießbar ist,

- es ist eine Abspulvorrichtung (48) für ein auf Spulen (49) aufgewickeltes Vlies (51) in Form eines Wirrfaservlieses vorhanden,

- es ist eine Leit- und Formvorrichung (52) vorhanden, mittels der das Vlies (51) von der Abspulvorrichtung (48) zum Dorn (22) hinleitbar ist und zu einem in Längsrichtung offenen Schlauch (53) formbar ist, der den Dorn außen umgibt,

- es ist eine Ringrakel (61) vorhanden, mittels der das aufgegossene Kunstharzschicht zu einer gleichmäßig dicken Kunstharzschicht formbar ist und mittels der zugleich der vom Vlies (51) gebildete Schlauch zum Bilden einer Stützschicht in die Kunstharzschicht einbettbar ist,

- es ist eine Zuführvorrichtung (55) für ein Kunstharz vorhanden, mittels der aus einem Vorratsbehälter ein Kunstharz im Rückenbereich des Dorns (22) aufgießbar ist,

- es ist eine Leit- und Formvorrichtung (56) vorhanden, die den Dorn außen umgibt und mittels der die Fasern einer Anzahl vom Regalgatter (12) herangeleiteter Faserstränge (14) in Form eines geschlossenen kegelstumpfförmigen Fasermantels (59) zum Dorn (22) hinleitbar sind,

- es ist eine Ringrakel (61) vorhanden, mittels der das aufgegossene Kunstharz zu einer gleichmäßig dicken Kunstharzschicht formbar ist und mittels der zugleich der Fasermantel (59) zum Bilden einer axialen Verstärkungsschicht in die Kunstharzschicht einbettbar ist,

- es ist eine Zuführvorrichtung (55) für ein Kunstharz vorhanden, mittels der aus einem Vorratsbehälter ein Kunstharz im Rückenbereich des Dorns (22) aufgießbar ist,

- es ist ein kranzförmiger Spulenträger (63) vorhanden, der den Dorn (22) mittig umgibt und der an einem Lagergestell (64) drehbar gelagert ist.

- am Spulenträger (63) ist wenigstens eine Spule (68) aus einem Faserstrang (69) drehbar gelagert.

- der Spulenträger (63) ist mit einem Antrieb (65; 66; 67) mit einstellbarer Drehzahl gekoppelt,

- am Spulenträger (63) sind Leitvorrichtungen (71) angeordnet, mittels der der Faserstrang (69) von jeder vorhandenen Spule (68) zum Dorn (22) hinleitbar ist und beim Umlauf des Spulenträgers (63) zum Bilden einer tangentialen Verstärkungsschicht in die Kunstharzschicht einbettbar ist,

- es ist eine Zuführvorrichtung (76) für ein Kunstharz vorhanden, mittels der aus einem Vorratsbehälter ein Kunstharz im Rückenbereich des Dorns (22) aufgießbar ist,

- es ist eine Leit- und Formvorrichtung (77) vorhanden, die den Dorn außen umgibt und mittels der die Fasern einer Anzahl vom Regalgatter (12) herangeleiteter Faserstränge (14) in Form eines geschlossenen kegelstumpfförmigen Fasermantels (79) zum Dorn (22) hinleitbar sind,

- es ist eine Ringrakel (78) vorhanden, mittels der das aufgegossene Kunstharz zu einer gleichmäßig dicken Kunstharzschicht formbar ist und mittels der zugleich der Fasermantel (79) zum Bilden einer weiteren axialen Verstärkungsschicht in die Kunstharzschicht einbettbar ist,

- es ist eine Zuführvorrichtung (76) für ein Kunstharz vorhanden, mittels der aus einem Vorratsbehälter ein Kunstharz im Rückenbereich des Dorns (22) aufgießbar ist,

- es ist ein kranzförmiger Spulenträger (81) vorhanden, der den Dorn (22) mittig umgibt und der an einem Lagergestell drehbar gelagert ist,

- am Spulenträger (81) ist wenigstens eine Spule (82) aus einem Faserstrang (83) drehbar gelagert,

- der Spulenträger (81) ist mit einem Antrieb mit einstellbarer Drehzahl gekoppelt, dessen Drehrichtung umgekehrt zu derjenigen des vorangehenden Spulenträgers ist,

- am Spulenträger (81) sind Leitvorrichtungen angeordnet, mittels der der Faserstrang (82) von jeder vorhandenen Spule (82) zum Dorn (22) hinleitbar ist und beim Umlauf des Spulenträgers (81) zum Bilden einer weiteren tangentialen Verstärkungsschicht in die Kunstharzschicht einbettbar ist,

- bei Bedarf sind weiter vorhanden, je

- - eine Zuführvorrichtung (84) für ein flüssiges Kunstharz,

- - eine Leit- und Formvorrichtung (85) zum Heranleiten von Fasersträngen (14) und zum Weiterleiten deren Fasern in Form eines kegelstumpfförmigen Fasermantels (86) zum Dorn (22) hin,

- - eine Ringrakel (87) zum Formen der Kunstharzschicht und zum Einbetten des Fasermantels (86) in die Kunstharzschicht zwecks Bilden einer weiteren axialen Verstärkungsschicht,

- - eine Zuführvorrichtung (84) für flüssiges Kunstharz und

- - ein Spulenträger (88) zum Bilden einer weiteren tangentialen Verstärkungsschicht, wobei die Drehrichtung dieses Spulenträgers (88) entgegengesetzt zur Drehrichtung des vorangehenden Spulenträgers (63) ist,

- im Anschluß an den letzten Spulenträger (88) zum Bilden einer tangentialen Verstärkungsschicht ist eine Ringrakel (92) angeordnet, mittels der ein vorhandener Überschuß an Kunstharz abstreifbar ist,

- es ist eine Zuführvorrichtung (94) für ein Kunstharz vorhanden, mittels der aus einem Vorratsbehälter ein Kunstharz für eine Außenhaut des Kunststoffrohres im Rückenbereich des Dorns (22) aufgießbar ist,

- es ist eine Ringrakel (95) vorhanden, mittels der das aufgegossene Kunstharz zum Bilden einer Außenhaut des Kunststoffrohres zu einer gleichmäßig dicken Kunstharzschicht formbar ist,

- es ist eine Abspulvorrichtung (96) für eine bandförmige, auf Spulen aufgewickelte Trennfolie (98) vorhanden,

- es ist eine Leit- und Formvorrichtung (99) vorhanden, mittels der die Trennfolie (98) von der Abspulvorrichtung (96) zum Dorn (22) hinleitbar ist und zu einem in der Längsrichtung offenen Schlauch formbar ist, der die Außenhaut außen umgibt, wobei die Ränder der Trennfolie (88) im Bereich der Unterseite des Dorns (22) stumpf aneinanderstoßen,

- im Anschluß an die Leit- und Formvorrichtung (99) für den Trennschlauch ist eine Härtevorrichtung (103) angeordnet, die das Kunststoffrohr außen umgibt.

- die Härtevorrichtung (103) weist Wärmequellen und/oder Strahlungsquellen (104) auf, die um das Kunststoffrohr (100) herum angeordnet sind,

- die Härtevorrichtung (103) weist für das Kunststoffrohr (100) ein Führungsrohr (109) auf, dessen lichte Weite zumindest annähernd gleich der Summe aus dem Solldurchmesser des Kunststoffrohres (100) und der zweimaligen Wanddicke des Trennschlauches ist, dessen Wand zumindest abschnittweise und/oder flächenweise für die von den Wärmequellen und/oder Strahlungsquellen abgegebene Wärme bzw. Strahlung durchlässig ist und das sich in der Zugrichtung über die Härtevorrichtung (103) hinaus erstreckt, wobei seine Längserstreckung so bemessen ist, daß es das Kunststoffrohr (100) bis mindestens zu derjenigen Stelle seiner Bewegungsbahn umgibt, ab der die Außenhaut des Kunststoffrohres (100) eine ausreichende Formfestigkeit für die Abstützung des Kunststoffrohres (100) auf Tragrollen (111) hat,

- der Dorn (22) endet zumindest annähernd am hinteren Ende der Härtevorrichtung (103),

- an die Härtevorrichtung (103) schließt eine Aushärtestrecke (112) an, die Wärmedämmvorrichtungen (113) aufweist, die das Kunststoffrohr (100) außen umgeben,

- im Anschluß an die Aushärtestrecke (112) ist eine Zugvorrichtung (118) angeordnet, mittels der das Kunststoffrohr (100) durch Reibschluß in der Zugrichtung bewegbar ist,

- zwischen dem hinteren Ende des Führungsrohres (109) der Härtevorrichtung (103) und der Zugvorrichtung (118) sind Tragrollen (111) angeordnet, die auf die Höhenlage der Unterseite des Kunststoffrohres (100) einstellbar sind und die das Kunststoffrohr (100) bis zur Zugvorrichtung (118) hin tragen,

- im Anschluß an die Zugvorrichtung (118) ist eine Trennvorrichtung (125) vorhanden, die mittels einer Führung (127) in der Bewegungsrichtung des Kunststoffrohres (100) verfahrbar ist und mittels der das Kunststoffrohr (100) in einzelne Längenabschnitte (126) mit einem bestimmten Längenmaß aufteilbar ist,

- die Trennvorrichtung (125) weist eine Klemmvorrichtung (128) auf, mittels der sie während eines Trennvorganges am Kunststoffrohr (100) festklemmbar ist,

- die Trennvorrichtung (125) weist eine Rückholvorrichtung auf, mittels der die Trennvorrichtung nach Abschluß eines Trennvorganges in ihre Ausgangsstellung zurückbewegbar ist.

10. Einrichtung nach Anspruch 9,
**gekennzeichnet** durch die Merkmale:
- die Verbindevorrichtung (28) für die Trennfolie (25) weist eine Abspulvorrichtung (29) für ein Klebeband (31) auf,
- im Umfangsbereich der Ränder der Trennfolie (25) ist eine Andrückrolle (32) federnd angeordnet, mittels der das von der Abspulvorrichtung (29) herangeleitete Klebeband (31) an die Ränder der Trennfolie (25) andrückbar ist.

11. Einrichtung nach Anspruch 10,
**gekennzeichnet** durch das Merkmal:
- die Verbindevorrichtung ist als Ultraschall-Schweißvorrichtung ausgebildet, mittels der die einander überlappenden Ränder der Trennfolie (25) unmittelbar miteinander verbindbar sind.

12. Einrichtung nach einem oder mehreren der Ansprüche 9 bis 11,
**gekennzeichnet** durch die Merkmale:
- die Ringrakel (41) für die Kunstharzschicht zum Bilden einer Innenhaut ist an einer Führungsvorrichtung (42) angeordnet, mittels der die Ringrakel (41) in der Längsrichtung des Dorns (22) unverschieblich und in der Normalebene zur Längsachse des Dorns (22) beweglich geführt ist,
- die Führungsvorrichtung (42) weist mindestens eine Führungsrolle, bevorzugt jedoch zwei Führungsrollen (156) auf, die sich über den Trennschlauch auf dem Dorn (22) abstützen und deren Laufebene zumindest annähernd durch die Längsachse des Dorns (22) hindurchgeht, wobei sie untereinander einen Winkel zwischen 60° und 120°, bevorzugt einen Winkel von 90°, einschließen,
- die Führungsrollen (156) sind in einem Längenabschnitt des Dorns (22) angeordnet, der in der Zugrichtung des Kunststoffrohres (100) vor der Mündung (39) der Zuführvorrichtung (33) für das Kunstharz für die Innenhaut gelegen ist.

13. Einrichtung zum Durchführen des Verfahrens nach Anspruch 9
**gekennzeichnet** durch die Merkmale:
- es ist ein Regalgatter (12) vorhanden, das eine Anzahl Spulen (13) mit Faitsträngen (14) aus Glasfasern, Kohlefasern oder Textilfasern aufweist,

- am Regalgatter (12) sind Leitvorrichtungen (15) zum Abziehen der Faserstränge (14) von den Spulen (13) und zum Weiterleiten der Faserstränge (14) vorhanden,

- es ist ein Grundgestell (16) für die gemeinsame Aufnahme mehrere Arbeitsstationen und Vorrichtungen vorhanden,

- im Anfangsbereich des Grundgestells (16) ist eine Zuführvorrichtung (141) für ein Kunststoffinnenrohr (140) vorhanden, mittels der das Kunststoffinnenrohr (140) in der Fluchtlinie der Durchlaßöffnungen der nachfolgenden Arbeitsstationen diesen zuführbar ist,

- es ist eine Zuführvorrichtung (142) für ein Klebeharz vorhanden, mittels der aus einem Vorratsbehälter ein Klebeharz im Rückenbereich des Kunststoffinnenrohres (140) auf dieses aufgießbar ist,

- es ist eine ringförmige Rakel (143) (Ringrakel) vorhanden, die das Kunststoffinnenrohr (140) außen umgibt und mittels der das aufgegossene Klebeharz zu einer ringförmigen gleichmäßig dicken Klebeharzschicht formbar ist,

- unterhalb der Ringrakel (143) ist eine Auffangwanne für die abgestreifte Klebeharzmenge angeordnet,

- es ist eine Abspulvorrichtung (144) für ein auf Spulen (145) aufgewickeltes Vlies (146) in Form eines Wirrfaservlieses vorhanden.

- es ist eine Leit- und Formvorrichtung (147) vorhanden, mittels der das Vlies (146) von der Abspulvorrichtung (144) zum Kunststoffinnenrohr (140) hinleitbar ist und zu einem in Längsrichtung offenen Schlauch formbar ist, der das Kunststoffinnenrohr (140) außen umgibt,

- es ist eine Ringrakel (148) vorhanden, mittels der der vom Vlies (146) gebildete Schlauch zum Bilden einer Haft-und Pufferschicht in die Klebeharzschicht einbettbar ist und zugleich die überschüssige Klebeharzmenge abstreifbar ist.

- es ist eine Zuführvorrichtung (55) für ein Kunstharz vorhanden, mittels der aus einem Vorratsbehälter ein Kunstharz im Rückenbereich des Kunststoffinnenrohres (140) aufgießbar ist.

- es ist eine Leit- und Formvorrichtung (56) vorhanden, die das Kunststoffinnenrohr (140) außen umgibt und mittels der die Fasern einer Anzahl vom Regalgatter (12) herangeleiteter Faserstränge (14) in Form eines geschlossenen kegelstumpfförmigen Fasermantels (59) zum Kunststoffinnenrohr (140) hinleitbar sind,

- es ist eine Ringrakel (61) vorhanden, mittels der das aufgegossene Kunstharz zu einer gleichmäßig dicken Kunstharzschicht formbar ist und mittels der zugleich der Fasermantel (59) zum Bilden einer axialen Verstärkungsschicht in die Kunstharzschicht einbettbar ist.

- es ist eine Zuführvorrichtung (55) für ein Kunstharz vorhanden, mittels der aus einem Vorratsbehälter ein Kunstharz im Rückenbereich des Kunststoffinnenrohres (140) aufgießbar ist,

- es ist ein kranzförmiger Spulenträger (63) vorhanden, der das Kunststoffinnenrohr (140) ) mittig umgibt und der an einem Lagergestell (64) drehbar gelagert ist,

- am Spulenträger (63) ist wenigstens eine Spule (68) aus einem Faserstrang (69) drehbar gelagert,

- der Spulenträger (63) ist mit einem Antrieb (65; 66; 67) mit einstellbarer Drehzahl gekoppelt,

- am Spulenträger (63) sind Leitvorrichungen (71) angeordnet, mittels der der Faserstrang (69) von jeder vorhandenen Spule (68) zum Kunststoffinnenrohr (140) ) hinleitbar ist und beim Umlauf des Spulenträgers (63) zum Bilden einer tangentialen Verstärkungsschicht in Uie Kunstharzschicht einbettbar ist,

- es ist eine Zuführvorrichtung (76) für ein Kunstharz vorhanden, mittels der aus einem Vorratsbehälter ein Kunstharz im Rückenbereich des Kunststoffinnenrohres (140) ) aufgießbar ist,

- es ist eine Leit- und Formvorrichtung (77) vorhanden, die das Kunststoffinnenrohr (140) außen umgibt und mittels der die Fasern einer Anzahl vom Regalgatter (12) herangeleiteter Faserstränge (14) in Form eines geschlossenen kegelstumpfförmigen Fasermantels (79 ) zum Kunststoffinnenrohr (140) hinleitbar sind,

- es ist eine Ringrakel (78) vorhanden, mittels der das aufgegossene Kunstharz zu einer gleichmäßig dicken Kunstharzschicht formbar ist und mittels der zugleich der Fasermantel (79) zum Bilden einer weiteren axialen Verstärkungsschicht in die Kunstharzschicht einbettbar ist,

- es ist eine Zuführvorrichtung (76) für ein Kunstharz vorhanden, mittels der aus einem Vorratsbehälter ein Kunstharz im Rückenbereich des Kunststoffinnenrohres (140) aufgießbar ist,

- es ist ein kranzförmiger Spulenträger (81) vorhanden, der das Kunststoffinnenrohr (140) mittig umgibt und der an einem Lagergestell drehbar gelagert ist,

- am Spulenträger (81) ist wenigstens eine Spule (82) aus einem Faserstrang (83) drehbar gelagert,

- der Spulenträger (81) ist mit einem Antrieb mit einstellbarer Drehzahl gekoppelt, dessen Drehrichtung umgekehrt zu derjenigen des vorangehenden Spulenträgers ist,

- am Spulenträger (81) sind Leitvorrichtungen angeordnet, mittels der der Faserstrang (82) von jeder vorhandenen Spule (82 ) zum Kunststoffinnenrohr (140) hinleitbar ist und beim Umlauf des Spulenträgers (81) zum Bilden einer weiteren tangentialen Verstärkungsschicht in die Kunstharzschicht einbettbar ist,

- bei Bedarf sind weiter vorhanden, je

- - eine Zuführvorrichtung (84) für ein flüssiges Kunstharz,

- - eine Leit- und Formvorrichtung (85) zum Heranleiten von Fasersträngen (14) und zum Weiterleiten deren Fasern in Form eines kegelstumpfförmigen Fasermantels (86) zum Kunststoffinnenrohr (140) hin,

- - eine Ringrakel (87) zum Formen der Kunstharzschicht und zum Einbetten des Fasermantels (86) in die Kunstharzschicht zwecks Bilden einer weiteren axialen Verstärkungsschicht,

- - eine Zuführvorrichtung (84) für flüssiges Kunstharz, und

- - ein Spulenträger (88) zum Bilden einer weiteren tangentialen Verstärkungsschicht, wobei die Drehrichtung dieses Spulenträgers (88) entgegengesetzt zur Drehrichtung des vorangehenden Spulenträgers (63) ist,

- im Anschluß an den letzten Spulenträger (88) zum Bilden einer tangentialen Verstärkungsschicht ist eine Ringrakel (92) angeordnet, mittels der ein vorhandener Überschuß an Kunstharz abstreifbar ist,

- es ist eine Zuführvorrichtung (94) für ein Kunstharz vorhanden, mittels der aus einem Vorratsbehälter ein Kunstharz für eine Außenhaut des Kunststoffrohres im Rückenbereich des Kunststoffinnenrohres (140) aufgießbar ist,

- es ist eine Ringrakel (95) vorhanden, mittels der das aufgegossene Kunstharz zum Bilden einer Außenhaut des Kunststoffrohres zu einer gleichmäßig dicken Kunstzharzschicht formbar ist,

- es ist eine Abspulvorrichtung (96) für eine bandförmige, auf Spulen aufgewickelte Trennfolie (98) vorhanden,

- es ist eine Leit- und Formvorrichtung (99) vorhanden, mittels der die Trennfolie (98) von der Abspulvorrichtung (96 ) zum Kunststoffinnenrohr (140) hinleitbar ist und zu einem in der Längsrichtung offenen Schlauch formbar ist, der die Außenhaut außen umgibt, wobei die Ränder der Trennfolie (88 ) im Bereich der Unterseite des Kunststoffinnenrohres (140) stumpf aneinanderstoßen.

- im Anschluß an die Leit- und Formvorrichtung (99) für den Trennschlauch ist eine Härtevorrichtung (103) angeordnet, die das Kunststoffrohr außen umgibt,

- die Härtevorrichtung (103) weist Wärmequellen und oder Strahlungsquellen (104) auf, die um das Kunststoffrohr (100) herum angeordnet sind,

- die Härtevorrichtung (103) weist für das Kunststoffrohr (100) ein Führungsrohr (109) auf, dessen lichte Weite zumindest annähernd gleich der Summe aus dem Solldurchmesser des Kunststoffrohres (100) und der zweimaligen Wanddicke des Trennschlauches ist, dessen Wand zumindest abschnittweise und oder flächenweise für die von den Wärmquellen und oder Strahlungsquellen abgegebene Wärme bzw. Strahlung durchlässig ist und das sich in der Zugrichtung über die Härtevorrichtung (103) hinaus erstreckt, wobei seine Längserstreckung so bemessen ist, daß es das Kunststoffrohr (100) bis mindestens zu derjenigen Stelle seiner Bewegungsbahn umgibt, ab der die Außenhaut des Kunststoffrohres (100) eine ausreichende Formfestigkeit für die Abstützung des Kunststoffrohres (100) auf Tragrollen hat (111) hat,

- das Kunststoffinnenrohr (140) endet zumindest annähernd am hinteren Ende der Härtevorrichtung (103),

- an die Härtevorrichtung (103) schließt eine Aushärtestrecke (112) an, die Wärmedämmvorrichtungen (113) aufweist, die das Kuntstoffrohr (100) außen umgeben,

- im Anschluß an die Aushärtestrecke (112) ist eine Zugvorrichtung (118) angeordnet, mittels der das Kunststoffrohr (100) durch Reibschluß in der Zugrichtung bewegbar ist,

- zwischen dem hinteren Ende des Führungsrohres (109) der Härtevorrichtung (103) und der Zugvorrichtung (118) sind Tragrollen (111) angeordnet, die auf die Höhenlage der Unterseite des Kunststoffrohres (100) einstellbar sind und die das Kunststoffrohr (100) bis zur Zugvorrichtung (118) hin tragen,

- im Anschluß an die Zugvorrichtung (118) ist eine Trennvorrichtung (125) vorhanden, die mittels einer Führung (127) in der Bewegungsrichtung des Kunststoffrohres (100) verfahrbar ist und mittels der das Kunststoffrohr (100) in einzelne Längenabschnitte (126) mit einem bestimmten Längenmaß aufteilbar ist,

- die Trennvorrichtung (125) weist eine Klemmvorrichtung (128) auf, mittels der sie während eines Trennvorganges am Kunststoffrohr (100) festklemmbar ist, - die Trennvorrichtung (125) weist eine Rückholvorrichtung auf. mittels der die Trennvorrichtung nach Abschluß eines Trennvorganges in ihre Ausgangsstellung zurückbewegbar ist.

14. Einrichtung nach einem der Ansprüche 9 bis 13,
**gekennzeichnet** durch das Merkmal:
- zumindest bei einem Teil der Zuführvorrichtungen für ein flüssiges Kunstharz, bevorzugt bei allen Zuführvorrichtungen (33; 55; 76; 84; 94) ist die unterhalb der zugehörigen Ringrakel (41) angeordnete Auffangwanne (44) über eine Rückführleitung (36) mit dem Vorratsbehälter (34) der Zuführvorrichtung (33) verbunden.

15. Einrichtung nach einem oder mehreren der Ansprüche 9 bis 14,
**gekennzeichnet** durch die Merkmale:
- die Abspulvorrichtung (48) für das Vlies (51) zum Bilden einer Stützschicht ist mit zwei Spulenträgern ausgerüstet, auf denen je eine Spule (49) eines bandförmigen Vlieses (51) angeordnet ist, dessen Breite zumindest annähernd gleich dem halben Außenumfang der Innenhaut ist,

- die beiden Spulen (49) oder zumindest je eine Leitvorrichtung für das von ihnen abgewickelte Vlies sind beiderseits des Dorns (22) in einer solchen Höhe angeordnet, daß die Mitte der Vliesbänder (51) sich zumindest annähernd in der gleichen Horizontalebene wie die Längsachse des Dorns (22) befindet.

16. Einrichtung nach Anspruch 15,
**gekennzeichnet** durch das Merkmal:
- die Leit- und Formvorrichtung (52) für das Vlies (51) weist auf beiden Seiten des Dorns (22) je eine Leitschaufel (161) auf, deren dem Dorn (22) zugekehrte Innenfläche (162) zumindest in ihrem Endbereich konkav gekrümmt ist, mittels der das Vliesband zumindest näherungsweise zur Mantelfläche eines halben Kreiszylinders verformbar ist.

17. Einrichtung nach Anspruch 16,
**gekennzeichnet** durch das Merkmal:
- die Mündung (62') der Zuführvorrichtung (55) für das Kunstharz für die Stützschicht ist im Bereich der Leitschaufeln (161) der Leit- und Formvorrichtung (52) für das Vlies (51) in der Längsrichtung des Dorns (22) an einer Stelle angeordnet, an der die einander sich annähernden Ränder der beiden Vliesbänder (51) gerade noch einen ausreichend großen Abstand voneinander haben.

18. Einrichtung nach einem oder mehreren der Ansprüche 9 bis 17,
**gekennzeichnet** durch die Merkmale:
- die Leit- und Formvorrichtung (56) für die Faserstränge (14) und die Fasern für eine axiale Verstärkungsschicht weist einen Leitkranz (164) und vorzugsweise einen Leitring (165) auf, der bzw. die beide den Dorn (22) außen umgeben,

- der Leitkranz (164) weist eine der Anzahl der zuzuleitenden Faserstränge (14) entsprechende Anzahl Durchgangslöcher (166) auf, die entlang einem einzigen Kreisring oder entlang mehrerer mittig zueinander gelegener Kreisringe verteilt angeordnet sind und durch die je einer der Faserstränge (14) hindurchgezogen ist,

- der Leitring (165) weist eine ringförmig geschlossene Innenfläche (166) auf, deren lichte Weite kleiner als der kleinste Kreisring des Anordnungsmusters der Durchgangslöcher (166) im Leitkranz (164) ist und nur wenig größer als der Außendurchmesser des durch ihn hindurchbewegten Schichtaufbaues für das Kunststoffrohr (100) ist.

19. Einrichtung nach Anspruch 18,
**gekennzeichnet** durch das Merkmal:
- die Mündung der Zuführvorrichtung (55; 62) für das Kunstharz für die axiale Verstärkungsschicht ist im Längenabschnitt kurz vor dem Leitkranz (164) oder, bevorzugt, im Längenabschnitt zwischen dem Leitkranz (164) und dem Leitring (165) angeordnet, wobei die Zuleitung (62) vorzugsweise innerhalb der innersten Kegelstumpf-Mantelfläche verläuft, die durch die vom Leitkranz (164) zum Leitring (165) verlaufenden Faserstränge (14) aufgespannt wird.

20. Einrichtung nach einem oder mehreren der Ansprüche 9 bis 19,

**gekennzeichnet** durch die Merkmale:
- die Zuführvorrichtung (55) für das Kunstharz für die Stützschicht ist für einen Mengenstrom des Kunstharzes bemessen, der größer als der allein für die Stützschicht erforderliche Mengenstrom ist und der mindestens noch für die nächste axiale Verstärkungsschicht, vorzugsweise auch für die erste tangentiale Verstärkungsschicht, ausreicht,
- dementsprechend entfällt eine eigene Zuführvorrichtung für das Kunstharz für die nächste axiale Verstärkungsschicht und gegebenenfalls auch eine eigene Zuführvorrichtung für das Kunstharz für die nächste tangentiale Verstärkungsschicht.

21. Einrichtung nach einem oder mehreren der Ansprüche 9 bis 20,

**gekennzeichnet** durch die Merkmale:
- die Zuführvorrichtung (76) für das Kunstharz für die axiale Verstärkungsschicht, der keine Stützschicht vorangeht, vorzugsweise auch die Zuführvorrichtung für jede weitere axiale Verstärkungsschicht, ist für einen Mengenstrom des Kunstharzes bemessen, der größer als der allein für die axiale Verstärkungsschicht erforderliche Mengenstrom ist und der mindestens noch für die nachfolgende tangentiale Verstärkungsschicht ausreicht,
- dementsprechend entfällt eine eigene Zuführvorrichtung für das Kunstharz für die tangentiale Verstärkungsschicht.

22. Einrichtung nach einem oder mehreren der Ansprüche 9 bis 21,

**gekennzeichnet** durch die Merkmale:
- am Spulenträger (63) sind mehrere Spulen (68) gleichmäßig verteilt angeordnet,
- bevorzugt ist für jede der Spulen (68) eine Bremsvorrichtung vorhanden, deren Bremskraft mittels je einer Abtastvorrichtung zum Abtasten des Außendurchmessers der Spule (62) selbsttätig einstellbar ist.

23. Einrichtung nach einem oder mehreren der Ansprüche 9 bis 22,

**gekennzeichnet** durch das Merkmal:
- jeder Spulenträger (63) ist über je ein stufenlos einstellbares Getriebe (65) mit einer gemeinsamen Antriebswelle (66) (Fig. 4) gekoppelt, die am Grundgestell (16) gelagert ist und die sich von einem Antriebsmotor (67) zu allen angetriebenen Vorrichtungen (63; 81; 88) hin erstreckt.

24. Einrichtung nach einem der Ansprüche 9 bis 23,

**gekennzeichnet** durch die Merkmale:
- für jeden der Faserstränge (14) für eine axiale Verstärkungsschicht ist eine einstellbare Spannungsvorrichtung vorhanden, mittels der die Spannung im Faserstrang auf einen bestimmten Wert einstellbar ist,
- bevorzugt sind die Spannvorrichtungen in der Nähe des Leitkranzes (164) der Leit- und Formvorrichtung (56) angeordnet.

25. Einrichtung nach einem oder mehreren der Ansprüche 9 bis 24,

**gekennzeichnet** durch das Merkmal:
- das Führungsrohr (109) in der Härtevorrichtung (103) weist an seiner Unterseite einen schmalen Längsspalt auf.

26. Einrichtung nach einem oder mehreren der Ansprüche 9 bis 25,

**gekennzeichnet** durch das Merkmal:
- das Führungsrohr (109) in der Härtevorrichtung (103) ist als Glasrohr ausgebildet, das für Infrarotlicht durchlässig ist.

27. Einrichtung nach einem oder mehreren der Ansprüche 9 bis 26,

**gekennzeichnet** durch die Merkmale:
- das Führungsrohr (109) in der Härtevorrichtung (103) ist als Metallrohr ausgebildet, das vorzugsweise aus einem korrosionsarmen und abriebfesten Stahl hergestellt ist,
- das Führungsrohr (109) weist eine größere Anzahl Durchgangslöcher auf, die in der Längsrichtung und in der Umfangsrichtung des Führungsrohres (109) zueinander versetzt angeordnet sind.

28. Einrichtung nach einem oder mehreren der Ansprüche 9 bis 27,

**gekennzeichnet** durch die Merkmale:
- die Wärmedämmvorrichtung der Aushärtestrecke (112) wird durch eine Anzahl Abdeckhauben (113) gebildet, die zumindest näherungsweise als Hohlzylinder ausgebildet sind und deren Umfangswand wärmedämmend ausgebildet ist,
- die Abdeckhauben (113) sind mittels einer Längsführung (115) entlang dem Kunststoffrohr (100) verschiebbar geführt,
- die Längsführung (115) ist vorzugsweise um mindestens die Länge einer einzelnen Abdeckhaube (113) länger als die Summe der Länge aller Abdeckhauben (113).

29. Einrichtung nach einem oder mehreren der Ansprüche 9 bis 28,

**gekennzeichnet** durch die Merkmale:
- die Zugvorrichtung (118) wird durch zwei oder mehr Kettenförderer (119) gebildet, die vorzugsweise paarweise diametral in Bezug auf das Kunststoffrohr (100) angeordnet sind,
- die Kettenförderer (119) weisen Rollenketten (121) auf, die zumindest beim ziehenden Trum von Führungsschienen (122) geführt werden,
- die Rollenketten (121) sind mit Winkellaschen ausgerüstet, an denen Mitnehmerstollen (123) befestigt sind, die aus einem Elastomer hergestellt sind.

30. Einrichtung nach einem oder mehreren der Ansprüche 9 bis 29,

**gekennzeichnet** durch die Merkmale:

- die Klemmvorrichtung (128) weist zwei Paar Klemmbacken (129) auf, von denen das eine Klemmbackenpaar vor und das andere Klemmbackenpaar hinter dem Trennwerkzeug (132) der Trennvorrichtung (125) angeordnet ist,
- die Klemmbacken (129) sind vorzugsweise mittels pneumatischer Kolbenantriebe (131) betätigbar.

31. Einrichtung nach einem oder mehreren der Ansprüche 9 bis 30,
**gekennzeichnet** durch das Merkmal:
- die Rückholvorrichtung der Trennvorrichtung (125) weist einen pneumatischen Kolbenantrieb auf.

32. Einrichtung nach einem oder mehreren der Ansprüche 9 bis 31,
**gekennzeichnet** durch die Merkmale:
- der Dorn (22) weist mehrere zylindrische Längenabschnitte auf, deren Außendurchmesser von der Haltevorrichtung (21) aus stufenweise verringert ist,
- je eine Übergangsstelle von einer Durchmesserstufe zur nächsten liegt in der Bewegungsrichtung des Kunststoffrohres (100) unmittelbar neben der Aufwickelstelle des Faserstranges (69; 83; 91) für eine tangentiale Verstärkungsschicht,
- eine weitere Übergangsstelle liegt im Bereich der Härtevorrichtung (103).

33. Einrichtung nach Anspruch 32,
**gekennzeichnet** durch die Merkmale:
- der Dorn (22) ist aus mehreren selbständigen Eizelstücken zusammengesetzt, die bevorzugt mittels je einer Gewindeverbindung lösbar miteinander verbunden sind,
- die Verbindungsstellen der Einzelstücke liegen bevorzugt an den Übergangsstellen von einer Durchmesserstufe zur nächsten.

34. Einrichtung nach Anspruch 32 oder 33,
**gekennzeichnet** durch die Merkmale:
- im Anfangsbereich des Dorns (22) ist ein Anschluß für ein Druckgas, insbesondere Druckluft, vorhanden, mittels dessen ein unter einem gewissen Überdruck stehendes Gas in den Innenraum des Dorns (22) einleitbar ist,
- am Dorn sind an mehreren Stellen seiner Längserstreckung radiale Durchgangslöcher vorhanden, die sich vom Innenraum des Dorns bis zu seiner Außenseite erstrecken,
- die Durchgangslöcher sind bevorzugt an wenigstens einem Teil der Übergangsstellen oder in der Nachbarschaft der Übergangsstellen gelegen,
- vorzugsweise werden die Durchgangslöcher durch radiale Ausnehmungen in der Stirnfläche der Einzelstücke des Dorns (22) gebildet.
- an der Anschlußstelle und mindestens im Bereich nach dem letzten Durchgangsloch ist je eine Schottwand vorhanden, die den Innenraum des Dorns (22) nach außen abschließt.

35. Einrichtung nach Anspruch 34,
**gekennzeichnet** durch die Merkmale:

- der Innenraum desjenigen Längenabschnittes des Dorns (22), der im Bereich der Härtevorrichtung (103) gelegen ist, ist gegenüber demjenigen des vorangehenden Längenabschnittes durch eine Schottwand abgeschlossen,
- dieser Längenabschnitt weist einen Anschluß für eine im Inneren des Dorns angeordnete Druckgasleitung auf, deren Überdruck höher als der Überdruck in den vorangehenden Längenabschnitten des Dornes eingestellt ist.

36. Einrichtung nach einem oder mehreren der Ansprüche 9 bis 35,
**gekennzeichnet** durch die Merkmale:
- die Ränder () der Seitenwangen (173) der Leit- und Formvorrichtung (99) verlaufen von einer oberhalb des Kunststoffrohres (100) gelegenen Einlaufschulter (174) für die Trennfolie (98) aus in der Längsrichtung des Kunststoffrohres (100) um dieses herum stetig aufeinander zu und nähern sich in der lotrechten Meridianebene einander bis auf einen sehr kleinen Restspalt (175),
- die Seitenflächen (176; 177) der Ränder (172) der Seitenwangen (173) laufen zumindest im Bereich des Restspaltes (175) von der Innenkante (178) zur Außenkante (179) hin unter einem gewissen Winkel auseinander,
- in der Nachbarschaft der Leit- und Formvorrichtung (99) ist eine Ringrakel (101) angeordnet, die nicht vollständig geschlossen ist sondern in der lotrechten Meridianebene unten einen Restspalt (182) aufweist,
- die Seitenflächen des Restspaltes (182) der Ringrakel (101) laufen von der Innenkante (178) zur Außenkante (179) hin unter einem gewissen Winkel auseinander.

37. Einrichtung nach Anspruch 36,
**gekennzeichnet** durch die Merkmale:
- in der Bewegungsrichtung des Kunststoffrohres (100) ist hinter der Ringrakel (101) ein Abstreifer (185) angeordnet, dessen Abstreifkante (186) auf das Kunststoffrohr (100) abgestimmt ist,
- die Auffangwanne (102) unterhalb der Ringrakel (101) erstreckt sich einerseits bis in den Bereich des Abstreifers (185) und andererseits bis in den Bereich der Leit- und Formvorrichtung (99) hin.

Fig.1

Fig. 2

# Fig. 3

EP 0 374 583 A2

Fig.4

Fig. 5

EP 0 374 583 A2

Fig. 6

Fig.7

Fig. 8

EP 0 374 583 A2

Fig.9

EP 0 374 583 A2

Fig.10

## Fig.11